(19)

Europäisches Patentamt

European Patent Office

Office européen des brevets

(11) **EP 4 436 099 A1**

(12) **EUROPEAN PATENT APPLICATION**

(43) Date of publication:
**25.09.2024 Bulletin 2024/39**

(21) Application number: **23215345.2**

(22) Date of filing: **08.12.2023**

(51) International Patent Classification (IPC):
**H04L 9/08** (2006.01)   **H04L 9/40** (2022.01)

(52) Cooperative Patent Classification (CPC):
**H04L 9/0855; H04L 9/0822; H04L 45/00;**
**H04L 63/062; H04L 63/107**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.03.2023 JP 2023044525**

(71) Applicant: **Kabushiki Kaisha Toshiba**
**Minato-ku**
**Tokyo 105-0023 (JP)**

(72) Inventors:
• **YU, Yu**
  **Tokyo (JP)**
• **TANIZAWA, Yoshimichi**
  **Tokyo (JP)**

(74) Representative: **Marks & Clerk LLP**
**15 Fetter Lane**
**London EC4A 1BW (GB)**

(54) **KEY MANAGER, QKDN CONTROL DEVICE, QUANTUM CRYPTOGRAPHIC COMMUNICATION SYSTEM, INFORMATION PROCESSING DEVICE, KEY MANAGEMENT METHOD, QKDN CONTROL METHOD, INFORMATION PROCESSING METHOD, AND COMPUTER PROGRAM**

(57)    A key manager (10) according to one embodiment is connected to a QKD device (2) generating a link key by QKD, an application (5) of a user network, and a QKDN control device (6). A communication interface (11) of the key manager (10) receives, from the QKDN control device, route information for transmitting an application key to a destination key manager. A processing unit (13) of the key manager (10) identifies, from the route information, a key manager that is located in a first key sharing network (102a) to which the key manager connected to the application belongs and is connected to a second key sharing network (102b). The processing unit (13) determines a route in the first key sharing network from resource information of the first key sharing network, and causes the communication interface to transmit the application key encrypted with the link key by using the route.

FIG.1

EP 4 436 099 A1

**Description**

FIELD

Embodiments of the present disclosure relate generally to a key manager, a QKDN control device, a quantum cryptographic communication system, an information processing device, a key management method, a QKDN control method, an information processing method, and a computer program.

BACKGROUND

In the related art, there is known technology that an application acquires random numbers shared with another application by using quantum key distribution (QKD) from a key manager and performs cryptographic communication with another application by using the random numbers as an encryption key.

The cryptographic communication between the applications is performed in a user network such as the Internet, which is different from QKD networks.

However, in the conventional technology, as the scale of a QKD network increases, it is difficult to determine an optimal route for transmitting an encryption key.

BRIEF DESCRIPTION OF THE DRAWINGS

FIG. 1 is a diagram illustrating an example of the configuration of a quantum cryptographic communication system according to an embodiment;

FIG. 2 is a diagram illustrating an example of a quantum cryptographic communication network according to the embodiment;

FIG. 3A is a diagram illustrating a first example (bottlenecks of the remaining link key amount) of resource information of the embodiment;

FIG. 3B is a diagram illustrating a second example (hop count) of resource information according to the embodiment;

FIG. 3C is a diagram for explaining an example of a method of determining a key relay route according to the embodiment;

FIG. 4 is a diagram illustrating an example of a functional configuration of a key manager according to the embodiment;

FIG. 5 is a diagram illustrating an example of a functional configuration of a QKDN control device according to the embodiment;

FIG. 6 is a diagram illustrating an example of a functional configuration of an information processing device according to the embodiment;

FIG. 7 is a diagram for explaining an example of key relays between different types of KSNs according to the embodiment;

FIG. 8A is a diagram illustrating a first example of the KSN domain of the embodiment;

FIG. 8B is a diagram illustrating a second example of the KSN domain of the embodiment;

FIG. 9 is a diagram for explaining a first calculation example of a first reference value according to the embodiment;

FIG. 10 is a diagram for explaining a second calculation example of the first reference value according to the embodiment;

FIG. 11 is a diagram for explaining an example of a method of determining a key relay route according to the embodiment;

FIG. 12 is a flowchart illustrating an example of a QKDN control method according to an embodiment;

FIG. 13 is a table illustrating an example of affiliation information according to the embodiment;

FIG. 14 is a table illustrating an example of connection status information according to the embodiment;

FIG. 15 is a table illustrating an example of first reference value information according to the embodiment;

FIG. 16 is a diagram illustrating a first example of the header format of a key relay message according to the embodiment;

FIG. 17 is a diagram illustrating a second example of the header format of a key relay message according to the embodiment;

FIG. 18 is a diagram illustrating an example of the configuration of centralized management according to the embodiment; and

FIG. 19 is a diagram illustrating an example of the hardware configuration of a KM, the QKDN control device, and the information processing device according to the embodiment.

DETAILED DESCRIPTION

A key manager (10) according to one embodiment is connected to a quantum key distribution (QKD) device (2) generating a link key by QKD, an application (5) of a user network, and a quantum key distribution network (QKDN) control device (6). The key manager (10) includes a communication interface (11) and a processing unit (13). The communication interface (11) is configured to receive route information from the QKDN control device. The route information represents a route for transmitting, to a destination key manager, an application key used for encrypting or decrypting communication in the user network. The processing unit (13) is configured to identify a key manager from the route information. The key manager to be identified is located in a first key sharing network (102a) to which the key manager connected to the application belongs and being connected to a second key sharing network (102b). The processing unit (13) is configured to determine a route in the first key sharing network from the key manager connected to the application to the key manager connected to the second key sharing network. The route is determined on the basis of resource information of the first key sharing network. The processing unit (13) is configured to cause the communication interface to transmit the application key encrypted with the link key by using the route.

Hereinafter, embodiments of a key manager, a quantum key distribution network (QKDN) control device, a quantum cryptographic communication system, an information processing device, a key management method, a QKDN control method, an information processing method, and a computer program will be described in detail with reference to the accompanying drawings.

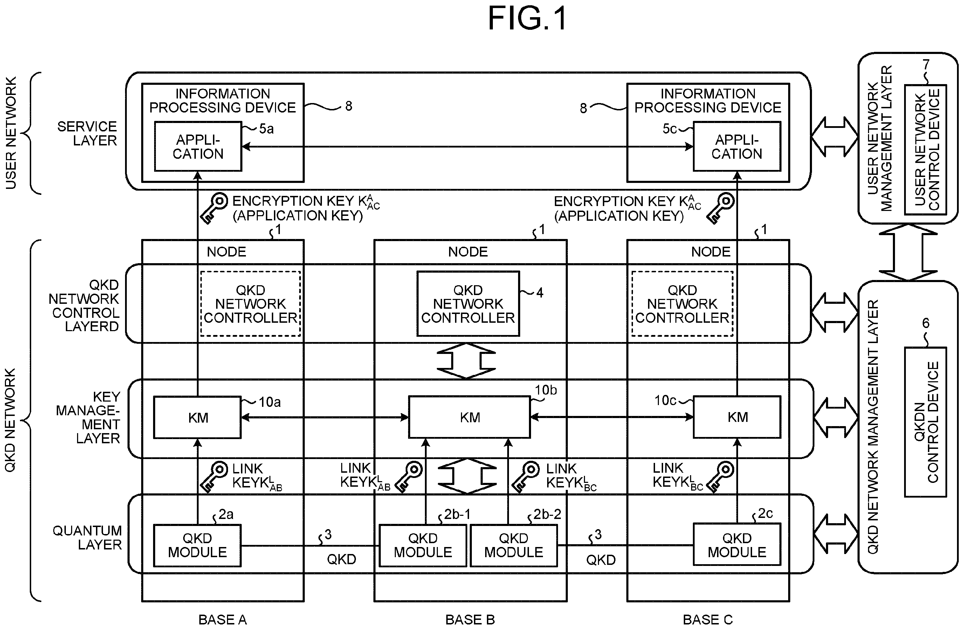

FIG. 1 is a diagram illustrating an example of the configuration of a quantum cryptographic communication system according to an embodiment.

Viewing FIG. 1 horizontally, a QKD network architecture includes, from the bottom, a quantum layer, a key management layer, and a QKD network control layer and a QKD network management layer for managing these three layers. With these four layers, an application key used for encrypting and decrypting data communication of an application 5 is generated and supplied to a service layer in the uppermost user network. Viewing FIG. 1 vertically, three nodes 1 (QKD nodes/trusted nodes) including the QKD network and the user network are individually installed in a base A, a base B, and a base C.

The quantum layer includes QKD modules 2 and QKD links 3. The main function of the quantum layer is to enable exchanging photons and classical information (control information transmitted and received in a normal control link different from the QKD link) with a QKD module 2 at another base and sharing a link key (random number sequence). The quantum layer also has a function of supplying a random number sequence to key managers (KMs) 10 (10a to 10c). A link key (quantum encryption key) shared by the QKD links 3 is guaranteed not to be eavesdropped based on the principle of quantum mechanics. When encrypted data communication is performed using a cryptographic communication scheme called a one-time pad by using a shared link key, it is guaranteed by information theory that data to be transmitted and received cannot be decrypted by eavesdroppers having any knowledge. The QKD modules 2 (2a, 2b-1, 2b-2, and 2c) are each connected by a QKD link 3 such as an optical fiber.

Note that the scheme of sharing a link key by the QKD technology has constraint of distance that the link key can be shared due to use of a single photon as a medium. For example, as illustrated in the example of the quantum layer in FIG. 1, the QKD modules 2 are basically on a one-to-one basis, however, in a case of relaying, at least two QKD modules 2b-1 and 2b-2 are required in the base B that performs the relaying. The example of FIG. 1 illustrates a case where an application key $K^A_{AC}$ is supplied to the base A and the base C. In the base B, the QKD module 2b-1 decrypts the application key encrypted in the base A with the same link key $K^L_{AB}$ (namely, a common key in which the encryption key and the decryption key are the same) as that of the base A. Then, the QKD module 2b-2 encrypts the decrypted application key again with the link key $K^L_{BC}$ and relays the encrypted application key $K^A_{AC}$ to the base C.

In QKD, communication performance such as the distance and the speed has to be sacrificed to some extent to ensure unconditional security. In general, a link key generation rate is about 200,000 to 300,000 bits per second (200 to 300 kbps) within a range of 50 km of laid fibers. In a case where QKD key distillation processing is hardware-optimized, the QKD key generation rate reaches a maximum of 10 Mbps for a short distance.

In order to maintain the key generation rate at Mbps, it is necessary to install relay nodes at distance intervals at which Mbps can be maintained and to perform key relay between bases that perform relay. Meanwhile, in the bases that perform the relay, it takes time for processing the encryption and decryption.

The key management layer includes key managers (KMs) 10a to 10c and KM links. The main functions of the key management layer include supply of an application key to the applications 5a and 5c that actually encrypt data, key relay to another base via a KM link, and others. Accompanying the functions above, the key managers (KMs) 10a to 10c perform overall key management such as reception of a key request from the applications 5a and 5c and storage of an interface.

The QKD network control layer includes a QKD network controller 4 and links. The QKD network control layer controls services of the QKD network in general. The QKD network controller may be installed in each base, or one (or a plurality of) QKD network controller(s) may be installed in the entire quantum cryptographic communication system as illustrated in FIG. 1. Moreover, the QKD network controller 4 and a KM 10 may be integrally implemented.

The QKD network management layer includes a QKDN control device 6. The QKD network management layer has a function of collecting performance information from each of the layers, monitoring whether or not services are operating properly, and commanding control to the QKD network control layer as needed. A plurality of QKDN control devices 6 may be provided depending on the configuration of the QKD network. Alternatively, the function of the QKDN control device 6 may be implemented by a KM10.

The service layer includes, although the configuration differs depending on a user, the applications 5a and 5c for implementing encrypted communication, computer modules, and others. In addition, the service layer has a function of encrypting the application key with the link key and transferring the encrypted application key to an adjacent node. Note that an application 5 in the service layer may separately generate an encryption key (application key) that is different from the link key from random number information or the like irrelevantly from QKD.

In the service layer, the application key is mainly used for encryption by a common encryption scheme. The common encryption scheme is an encryption scheme in which communication data and messages are encrypted and decrypted using the same application key shared in advance on the transmission side and the reception side. Specifically, the application key is used in advanced encryption standard (AES) encryption, one time pad (OTP) encryption, and others.

A user network management layer includes a user network control device 7. The user network management layer collects performance information from the service layer and monitors whether or not the services are operated properly.

Note that the architecture illustrated in FIG. 1 indicates basic elements. Actually, the configuration of the architecture may change depending on the situation. For example, the number of bases is not limited to three. Moreover, the number of applications 5 is not limited to two. Moreover, for example, the number of QKDN control devices 6 in the QKD network management layer is not limited to one.

The above-described user network is a public network, in which cryptographic communication is performed by the applications 5. The applications 5 operate in information processing devices 8 such as a personal computer or a smart device. The user network is, for example, a data communication network such as the Internet or a cellular communication network.

The above-described QKD network (quantum cryptographic communication network) is a private network, and nodes (QKD nodes/nodes) are installed depending on the actual needs. The nodes provide an encryption key for cryptographic communication to the user network.

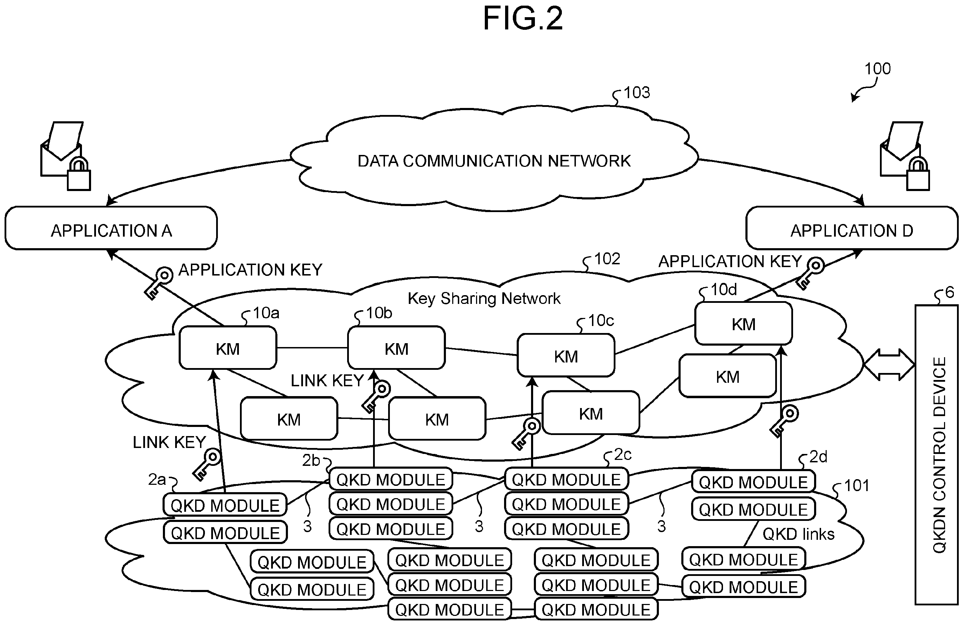

FIG. 2 is a diagram illustrating an example of a quantum cryptographic communication network 100 according to the embodiment. The example of FIG. 2 is of a small-scale QKDN since the number of KMs is as small as eight. Applications A and D in the user network perform secure communication via a data communication network 103.

A key sharing network (KSN) 102 in the key management layer includes KMs 10 and links between the KMs 10. Hereinafter, the key sharing network 102 is referred to as the KSN 102. In the QKDN management layer, the QKDN control device 6 that communicates with the KMs 10 of the KSN 102 is installed.

In the quantum layer, a network 101 including a plurality of QKD modules 2 and a plurality of QKD links 3 between the QKD modules 2 is configured. Since the connection between QKD modules 2 is one-to-one, the QKD modules 2 corresponding to a higher KM 10 are installed depending on the number of links connected to the higher KM 10.

Note that the number of KMs 10, the number of QKD modules 2, and the number of applications are not limited to the example of FIG. 2.

Also note that when encrypting the application key with the link key and transmitting the encrypted application key, a KM 10 consumes the link key since the link key is used in the one-time pad, that is, the link key that has been used once is discarded. Therefore, the KM 10 cannot relay the application key at more than or equal to the amount of shared link keys or faster than or equal to the speed at which the link keys are shared.

When the application key is transmitted via a plurality of KMs 10, the sharing speed of the application key is limited by a link having the smallest number of link keys or a link having the lowest sharing speed of the link key. The throughput of cryptographic communication in the quantum cryptographic communication system is restricted by such links being bottlenecks. Alternatively, it is not possible to share the application key in a link in which the link key is depleted. In the quantum cryptographic communication system, it is desirable to select a route having as most favorable bottleneck as possible (for example, a route in which the bottleneck of links is the largest) and to share the application key. The bottleneck of links included in a route is specified, for example, on the basis of values calculated for each link included in the route. Specifically, the bottleneck of the links included in the route is specified by, for example, a link having the smallest value among values calculated by Equation (1) described later.

Meanwhile, when attention is paid to the consumption of link keys of the entire quantum cryptographic communication system, it can be said that the consumption of link keys increases as a route passes through more links. Since the link key is used when the application key is shared, the link key is a system resource that determines the throughput of the application 5. Therefore, it is desirable to reduce the number of links to be passed through and to suppress the consumption of the link keys in the system as a whole.

Note that a protocol (routing protocol) for determining a route (key relay route) for sharing the application key by quantum key distribution in the KSN 102 is performed by a desired scheme. For example, in a case where the KSN 102 is IP-based, a communication protocol of Interior Gateway Protocol (IGP) is used. For example, Open Shortest Path Fast (OSPF) is used as a widely used IGP communication protocol. OSPF uses the distance (a sum of costs of links included in each key relay route) as a metric for performing routing (routing control). In a case where the KSN 102 is non-IP based, the route for sharing the application key is determined in a desired scheme different from the IGP communication protocol.

Data correlated with a link between a KM 10 and an adjacent KM 10 included in the KSN 102 is as follows. The data below is assigned a sequence number in the order of time and is updated by the sequence number.

Data correlated with a link:

- Remaining key amount information: Holding amount of the link key
- Remaining key amount information: Generation rate of link key
- Remaining key amount information: Consumption rate of link key

Data correlated with a KM:

- Database representing configuration in KSN domain (link state database)
- Settled information of shortest path tree to destination KM in KSN domain
- Bottleneck from source to destination KM in KSN domain
- Hop count from source to destination KM in KSN domain
- Next hop

Data correlated with a link is remaining key amount information. The remaining key amount information includes three types of information (holding amount of the link key, generation rate of a link key, and consumption rate of link keys).

The holding amount of the link key is the amount of keys that have not yet been used out of keys shared by performing quantum key distribution between the adjacent KMs 10. The holding amount of the link key is accumulated (increases) by performing quantum key distribution and consumed (decreases) by using the link key in an application key relay between any source KM 10 and a destination KM 10.

The generation rate of the link key represents a speed at which the link key is shared by performing quantum key distribution between the adjacent KMs 10. The generation rate of the link key varies for each link depending on setting parameters of the KMs 10 connected to the link, the influence by connection environment, or others.

The consumption rate of the link key represents the consumption rate of the link key used for sharing the application key between the adjacent KMs 10. The consumption rate of the link key varies for each link depending on the application key request, the influence of the connection environment, or others.

Therefore, the calculation formula for the available remaining key amount for each link is calculated by, for example, the following Equation (1).

$$A_k^{key} = Link_k^{current} + (SKR_k - C_k) \times T_R \quad \cdots (1)$$

In Equation (1), k is a number for identifying a KM 10. $Link_k^{current}$ denotes the holding amount of the link key, $SKR_k$ denotes the generation rate of the link key, $C_k$ denotes the consumption rate of the link key, and $T_R$ denotes a reference time interval. The reference time interval (t) is set depending on the actual situation.

For example, in a case where $Link_k^{current}$ is 1000 Mbits, $SKR_k$ is 3 Mbits/sec, $C_k$ is 1 Mbits/sec, and $T_R$ is 300 sec, the remaining link key amount $A_k^{key}$ available after a reference time of this KM 10 is 1600 (1.6 Gbits).

Note that the method of calculating the remaining key amount information is not limited to the above Equation (1). For example, the remaining key amount information may be calculated only by the holding amount of the link key. Alternatively, for example, the remaining key amount information may be calculated only by the generation rate of the link key. Still alternatively, for example, the remaining key amount information may be calculated by a combination of the generation rate of the link key and the holding amount of the link key. Still alternatively, for example, the remaining key amount information may be calculated by a combination of the generation rate of the link key and the consumption rate of the link key. Still alternatively, for example, the remaining key amount information may be calculated by a combination of the holding amount of the link key and the consumption rate of the link key. Still alternatively, for example, the remaining key amount information may be calculated by a combination of the generation rate of the link key, the holding amount of the link key, and the consumption rate of the link key.

Information necessary for determination of a key relay route in the KSN domain is collected by the following processing (1) to (4) using OSPF which is an existing routing protocol, for example, in the case of the IP-based KSN.

(1) In OSPF, a KM 10 issues a message called a link state update and shares information such as states of links to which the KM 10 is connected, network addresses of the links, and a cost with other KMs 10. The link state includes information (route information) indicating how a KM 10 is connected to other KMs 10.

(2) Each KM 10 grasps the network configuration in the KSN domain on the basis of the received information of the link state update. Then, each KM 10 constructs a table (link state database) representing the network configuration in the KSN domain.

(3) Each KM 10 uses the Dijkstra algorithm from this database to calculate a shortest path tree in the domain in which the KM 10 itself is the source and creates a forwarding table.

(4) Each KM 10 stores forwarding table information and resource information from a KM 10 to another KM 10 in the KSN domain.

As described above, the data correlated with a KM 10 is the link state database, the settled information of the shortest path tree to the destination KM 10 in the KSN domain, the bottleneck from the source to the destination KM 10 in the KSN domain, the hop count from the source to the destination KM 10 in the KSN domain, and the next hop.

The link state database represents a network configuration (connection relationship) in the KSN domain and is information used when each KM 10 calculates the shortest path. The shortest path tree for each destination KM 10 in the KSN domain may be settled or not settled.

A destination KM 10 for which the shortest path tree has not been settled, the key relay route to the destination KM 10 is merely a shortest path candidate. The bottleneck from the source to the destination KM 10 in the KSN domain represents the bottleneck of the remaining key amount of the links when the shortest path candidate to reach the destination KM 10 is passed through. The hop count from the source to the destination KM 10 in the KSN domain represents the hop count when the shortest path candidate to reach the destination KM 10 is passed through. The next hop represents a next hop that is a candidate for the shortest path.

Each KM 10 has a link state database, settled information as a shortest key relay route tree in the KSN domain, the remaining key amount of each link from the source KM to each of other KMs 10, the hop count from the source to each of other KMs 10, and the next hop. The remaining key amount of each link from the source to other KMs 10 and the hop count from the source to the other KMs 10 are held for each of the other KMs 10.

In the Dijkstra algorithm in OSPF, the metric is the distance. Meanwhile, in the key sharing routing protocol of the present embodiment, not the distance but the bottleneck of the remaining key amount in the key relay route is used for the metric calculation. As a result, the holding amount of the link key and the link key generation rate between the KMs 10 sharing the application key are maintained at greater than or equal to a given value, thereby ensuring that acquisition of the application key of an amount required by the application in the user network is not hindered.

First, resource information used for calculating the metric will be described.

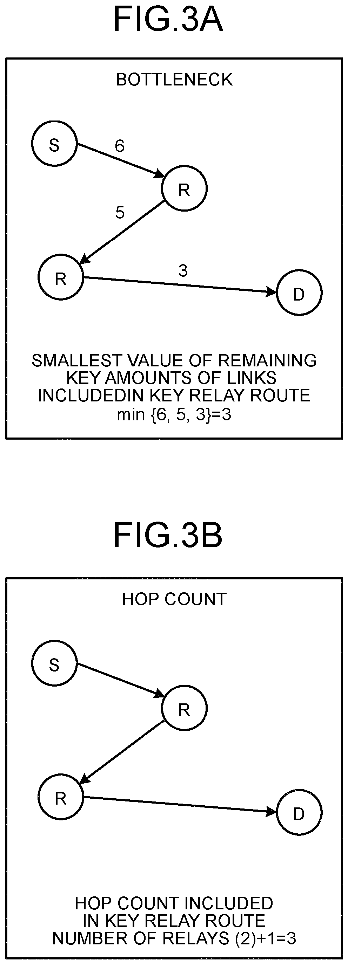

FIG. 3A is a diagram illustrating a first example (bottleneck of the remaining link key amount) of resource information of the embodiment. A numerical value assigned to each link represents the remaining amount of the link key. The smallest value of the remaining key amount of links included in a key relay route from the source (S) to the destination (D) via relays (R) is the bottleneck. In FIG. 3A, since the bottleneck is the smallest value of the remaining key amount of the links included in the key relay route, which is min {6,5,3} = 3. That is, the bottleneck of the key relay route in FIG. 3A is 3.

FIG. 3B is a diagram illustrating a second example (hop count) of the resource information of the embodiment. The hop count is a value obtained as the number of relay KMs 10 + 1. The value obtained as the number of the relay KMs 10 included in the key relay route from the source (S) to the destination (D) via the relays (R) + 1 is the hop count. In the example of FIG. 3B, since the hop count is obtained as the number of relay KMs 10 + 1 and thus is the number of relays included in the key relay route (2) + 1 = 3. That is, the hop count of the key relay route in FIG. 3B is three.

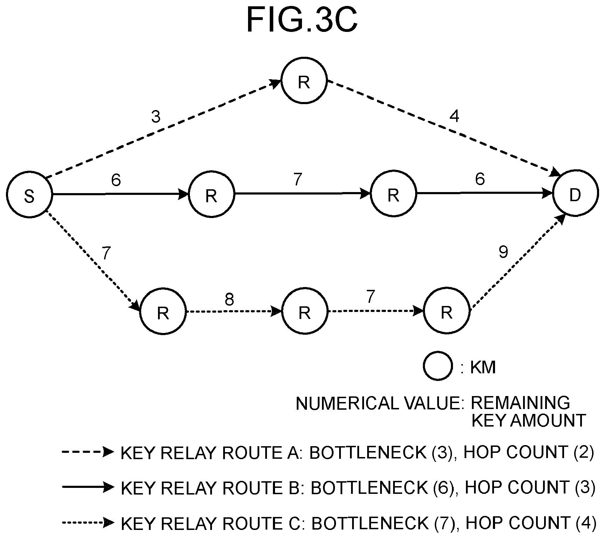

FIG. 3C is a diagram for describing an example of a method of determining a key relay route according to the embodiment. In FIG. 3C, the source KM 10 is denoted by S, the destination KM 10 is denoted by D, and a relay KM 10 for sharing the application key is denoted by R. In addition, the numerical value assigned to a link represents the remaining key amount of the link.

A key relay route A has a bottleneck of 3 and a hop count of 2. A key relay route B has a bottleneck of 6 and a hop count of 3. A key relay route C has a bottleneck of 7 and a hop count of 4.

An example of a reference value calculation method in a case of calculating from the bottleneck and the hop count will be described below.

First method: Give priority to the bottleneck, compare hop counts when the bottlenecks are equal, and determine a route with a smaller hop count as the optimal key relay route.
Second method: Give priority to the hop count, compare bottlenecks when the hop counts are equal, and determine a route with a large bottleneck as the optimal key relay route.
Third method: Determine the optimal key relay route by a calculation formula of a reference value (RV) including the bottleneck (BN) and the hop count (Hops).

The calculation formula is calculated by, for example, the following equation.

$$RV = \delta \times BN + (1 - \delta) \times (1/Hops)$$

Here, $\delta$ is a coefficient and is a positive real number smaller than 1.

Meanwhile, in a case where the reference value is only the bottleneck, the key relay route C is the optimal key relay route. In a case where the reference value is only the hop count, the key relay route A is the optimal key relay route. By setting the coefficient of the above calculation formula, it is possible to implement a case where the reference value is only one of the above. For example, in a case where the reference value is only the bottleneck, $\delta = 1$ is set. Alternatively, in a case where the reference value is set to only the hop count, $\delta = 0$ is set.

An example in which $\delta = 0.5$ is set and the reference value is calculated in accordance with the third method will be described using the example of FIG. 3C.

The reference value of the key relay route A is RV = 0.5 × 3 + (1 - 0.5) × (1/2) = 1.75. The reference value of the key relay route B is RV = 0.5 × 6 + (1 - 0.5) × (1/3) = 3.67. The reference value of the key relay route C is RV = 0.5 × 7 + (1 - 0.5) × (1/4) = 3.625.

In the first method, the bottleneck and the hop count to each KM 10 are held individually, and the hop counts are compared with one another other only when the bottlenecks are equal. In the second method, the bottleneck and the hop count to each KM 10 are held individually, and the bottlenecks are compared with one another only when the hop counts are equal. In the third method, a calculation formula representing a reference value is created in advance, and the reference value is calculated by using the formula with the bottleneck and the hop count to each KM 10.

Note that the calculation formula of the reference value is an example, and the calculation formula is not limited thereto. For example, another equation may be used in which a sum obtained by adding a weighted bottleneck and a weighted hop count is used as the reference value. In this case, coefficients (weighting) for the bottleneck and the hop count may be set as desired.

Exemplary Functional Configuration of KM

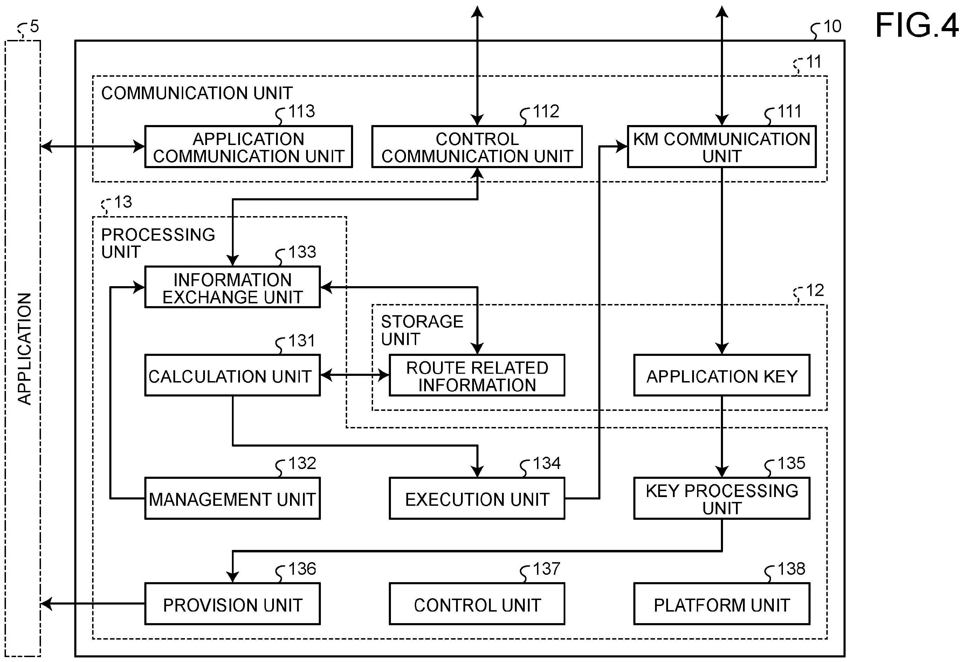

FIG. 4 is a diagram illustrating an example of the functional configuration of the key manager (KM) 10 of the embodiment. The key manager (KM) 10 of the embodiment includes a communication unit 11, a storage unit 12, and a processing unit 13.

The communication unit 11 is implemented by a communication interface that performs communication in at least one of a wireless manner and a wired manner. The communication unit 11 includes a KM communication unit 111, a control communication unit 112, and an application communication unit 113. The KM communication unit 111 performs communication for sharing an encryption key (application key) with one or more KMs 10 in the key management layer of the QKDN. The control communication unit 112 performs communication for sharing information such as key relay route information with the QKDN control device 6 in the QKD network management layer. The application communication unit 113 performs communication for sharing, for example, information regarding an application key request with the application 5 of the user network which is the uppermost service layer.

Note that the communication unit 11 may be implemented without being divided into the above three functional components.

The storage unit 12 is implemented by a storage medium such as a hard disk drive (HDD), an optical disk, a memory card, or a random access memory (RAM).

The storage unit 12 stores route related information and the application key shared among KMs 10. The route related information includes, for example, key relay route information received from the QKDN control device 6.

The processing unit 13 is implemented by at least one processing device and executes processing of the KM 10. This processing device includes, for example, a control device and an arithmetic device and is implemented by an analog or digital circuit or the like. The processing device may be a central processing unit (CPU) or may be a general-purpose processor, a microprocessor, a digital signal processor (DSP), an application specific integrated circuit (ASIC), a field-programmable gate array (FPGA), or a combination thereof.

The processing unit 13 includes a calculation unit 131, a management unit 132, an information exchange unit 133, an execution unit 134, a key processing unit 135, a provision unit 136, a control unit 137, and a platform unit 138.

The calculation unit 131 reads the route related information from the storage unit 12, calculates a key relay route inside the KSN 102 for implementing a key relay route, and calculates an optimal key relay route to the destination KM 10 and border KMs (BKMs) 10 to be passed through. The BKM 10 represents a KM 10 installed at a border between KSN domains.

The resource information is used for calculating a key relay route inside the KSN 102. The resource information includes, for example, state information of a link key calculated on the basis of at least one of the generation rate, the remaining amount, and the consumption rate of the link key calculated for each link included in a route candidate. The calculation unit 131 specifies a bottleneck of the state information of the link key used in a link included in the route candidate and determines a route on the basis of the bottleneck.

Note that the resource information may further include the hop count to a BKM 10 (KM 10 at a border) to be passed through that is calculated for each route candidate. Then, the calculation unit 131 may determine the route also on the basis of the hop count.

The calculation unit 131 also stores the calculated key relay route in the KSN 102 in the storage unit 12.

The management unit 132 manages remaining key amount information including the key generation rate, the holding amount of keys, the consumption rate of the key, etc. of a link to which a KM 10 is connected.

The information exchange unit 133 acquires the above information from the communication unit 11 and the management unit 132. The information exchange unit 133 also shares the information stored in the storage unit 12 with the QKDN control device 6.

The execution unit 134 executes key relay among KMs 10 in accordance with the key relay route calculated by the calculation unit 131.

The key processing unit 135 passes the application key to the provision unit 136 in accordance with a key request from the application 5. Specifically, the key processing unit 135 determines the requested amount of the application key, a provision time for providing the application key to the application 5, and a destination indicating a provision destination of the application key in response to the request from the application 5.

When the application key is received from the key processing unit 135, the provision unit 136 provides the application key to the application 5 on the user network in the service layer. For example, the provision unit 136 provides the application key of the requested amount determined by the key processing unit 135 to the provision destination determined by the key processing unit 135 by the provision time determined by the key processing unit 135. Note that the function of the provision unit 136 may be included in the communication unit 11.

The control unit 137 controls processing performed in the KM 10. For example, the control unit 137 controls activation and operation of each function of the KM 10.

The platform unit 138 provides operating system functions of a computer that are necessary for management and operation of functions on the KM 10, basic network functions, security functions, etc.

Exemplary Functional Configuration of QKDN Control Device

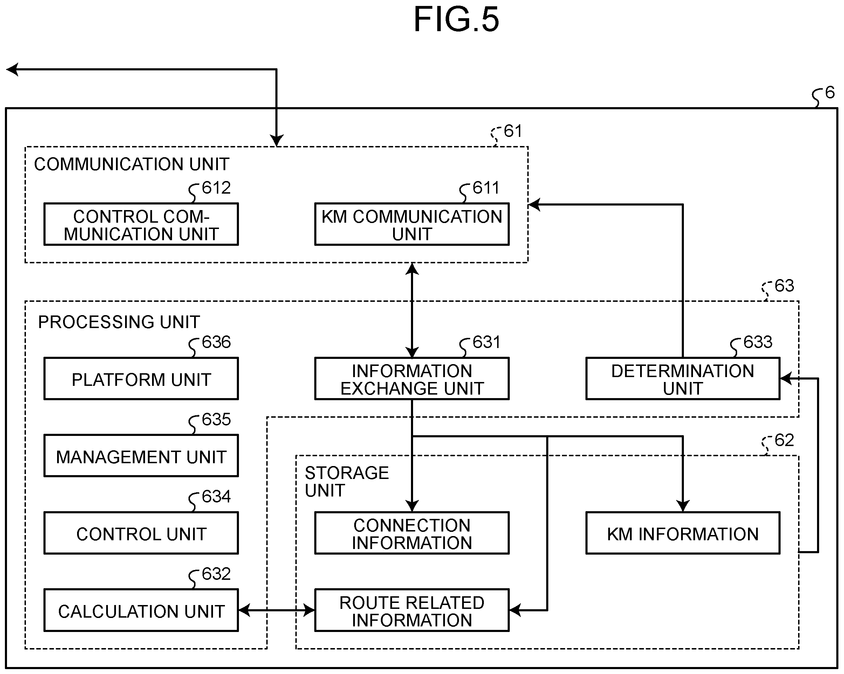

FIG. 5 is a diagram illustrating an example of the functional configuration of the QKDN control device 6 of the embodiment. The QKDN control device 6 of the embodiment includes a communication unit 61, a storage unit 62, and a processing unit 63. Note that implementation methods of the communication unit 61, the storage unit 62, and the processing unit 63 by hardware are similar to those of the communication unit 11, the storage unit 12, and the processing unit 13 of the KM 10.

The QKDN control device 6 of the embodiment is connected to KMs 10 that provide the application key used for encrypting or decrypting communication between the applications 5 in the user network to the applications 5.

The communication unit 61 includes a KM communication unit 611 and a control communication unit 612.

The KM communication unit 611 communicates with one or more KMs 10 described above. For example, the KM communication unit 611 performs communication for sharing ID information of KMs 10, a connection status between a BKM 10 and an adjacent KSN 102, remaining key amount information of a link in the KSN 102, key relay route related information in the KSN 102, and others. The key relay route related information is, for example, information belonging to KMs 10, a connection status between KSNs 102, and a first reference value used for determining whether or not each KSN 102 is passed through.

The control communication unit 612 performs communication for sharing information such as the ID information of KMs 10, the connection status of BKMs 10, and the first reference value between QKDN control devices 6. In addition, in a case where the information such as the first reference value is centrally managed by an authoritative route server device, the control communication unit 612 communicates with the authoritative route server device.

Note that the communication unit 61 may be implemented without being divided into the above two components.

The storage unit 62 stores KM information, connection information, and route related information. The KM information includes ID information of the KMs 10 and ID information of the KSN 102 to which the KMs 10 belong. The connection information includes ID information of BKMs 10 connected between KSNs 102, ID information of the KSNs 102, and others. The route related information includes remaining key amount information of links between the KMs 10, key relay route related information, and others. The route related information is used for calculating the first reference value of each KSN 102.

The processing unit 63 includes an information exchange unit 631, a calculation unit 632, a determination unit 633, a control unit 634, a management unit 635, and a platform unit 636.

The information exchange unit 631 acquires the above information from the communication unit 61 and stores the acquired information in the storage unit 62. The information exchange unit 631 also shares the information stored in the storage unit 62 with another QKDN control device 6.

The calculation unit 632 calculates the first reference value of the KSN 102 on the basis of the above-described route related information (for example, information of the KSN 102 to which the KMs 10 belong, a connection status between KSNs 102, etc.). The calculation unit 632 also stores the calculated first reference value in the storage unit 62.

The determination unit 633 reads the route related information from the storage unit 62. The determination unit 633 then calculates the respective second reference values of key relay routes, and determines an optimal key relay route on the basis of the second reference values. The determination unit 633 notifies KMs 10 related to the key relay of the optimum key relay route information that has been determined via the communication unit.

The control unit 634 controls processing performed in the QKDN control device 6. For example, the control unit 634 is responsible for control of activation and operation of each function.

The management unit 635 manages information of the KMs 10 connected to the QKDN control device 6, the number of KMs 10, and others.

The platform unit 636 provides operating system functions of a computer that are necessary for management and operation of functions on the QKDN control device 6, basic network functions, security functions, etc.

Exemplary Functional Configuration of Information Processing Device

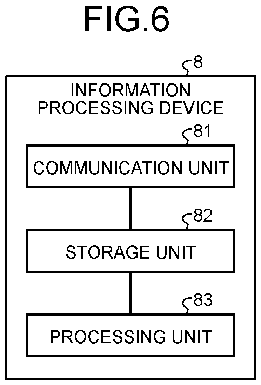

FIG. 6 is a diagram illustrating an example of the functional configuration of the information processing device 8 according to the embodiment. The information processing device 8 of the embodiment includes a communication unit 81, a storage unit 82, and a processing unit 83. Note that implementation methods of the communication unit 81, the storage unit 82, and the processing unit 83 by hardware are similar to those of the communication unit 11, the storage unit 12, and the processing unit 13 of the KM 10.

The communication unit 81 receives, by QKD, an application key used for encrypting or decrypting communication of the application 5a (an example of a source application) in the user network from the KM 10a (an example of a first key manager) connected to the QKD module 2a (an example of a QKD device) that generates the link key. In addition, this application key is encrypted by the link key and transmitted to the KM 10c using route information determined on the basis of the first reference value used for determining a KSN 102 to be passed through when relaying from the KM 10a belonging to a first KSN 102 to the KM 10c belonging to a second KSN 102 and is transmitted from the KM 10c to the application 5c.

The storage unit 82 stores, for example, an application key for each destination of communication of the application 5a (an example of the source application).

The processing unit 83 operates, for example, the application 5a (an example of the source application) to encrypt communication with the application 5c (an example of the destination application).

Note that the configurations of the KM 10, the QKDN control device 6, and the information processing device 8 in the embodiment are merely examples, and modifications may be made to the configurations as appropriate.

Two or more KSNs 102 having different quantum key distribution protocols of the quantum layer, different mechanisms of the key management layer, different key relay systems, or others may be configured.

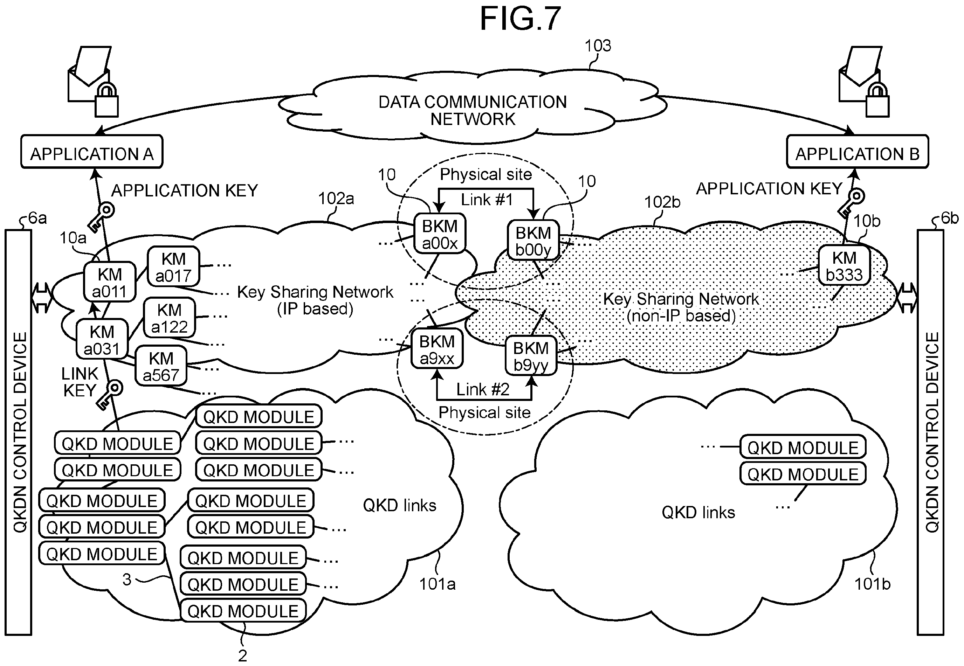

FIG. 7 is a diagram for describing an example of key relay between different types of KSNs 102 according to the embodiment. An application A and an application B perform secure communication via a data communication network 103.

In the example of FIG. 7, a KM 10 and a BKM 10 is assigned with identification information for identifying the KM 10. For example, identification information a011 is assigned to the KM 10a. In the example of FIG. 7, in a case where each KM 10 and each BKM 10 are distinguished and described, this identification information is used in the description.

The application A connects to a KM a011 belonging to a KSN 102a. The application B connects to a KM b333 belonging to the KSN 102b. The KSN 102a is an IP-based network, and the KSN 102b is a non-IP-based network. The KSN 102a and the KSN 102b are connected by a BKM a00x and a BKM b00y located at physically the same location or a BKM a9xx and a BKM b9yy located at physically the same location.

Links (Link #1 and Link #2) between KSNs 102a and 102b do not depend on QKD links 3 of QKD links 101a and 101b.

In addition, a QKDN control device 6#a and a QKDN control device 6#b are installed in the KSN 102a and the KSN 102b, respectively, and the QKDN control devices 6 are connected via another link different from Link#1 or Link#2. The link between the QKDN control devices 6 may be a QDK link or an ordinary link protected by a scheme other than QKD. Note that there may be no link between the QKDN control devices 6. In a case where there is no link between the QKDN control devices 6, information is shared via Link#1 or Link#2 between the BKMs 10.

Note that, in the example of FIG. 7, for the sake of simplicity, not all but some of the KMs 10 in the key sharing networks 102a and 102b and the QKD modules 2 in the networks 101a and 101b of the QKD links 3 are described.

As illustrated in FIG. 7, when the KM a011 connected to the application A shares the application key with the KM b333 connected to the application B, the route to the destination KM b333 cannot be determined. For example, there are a route via Link#1 and a route via Link#2. The route (key relay route) for sharing the application key between the different types of KSNs 102a and 102b is determined by the dedicated QKDN control devices 6 installed for each of the KSNs 102. For example, the QKDN control device 6a collects information inside the KSNs 102, shares the information inside the KSNs 102 with the QKDN control device 6b, and determines a key relay route. The information inside the KSNs 102 that is collected is, for example, route information from the destination KM a011 to the BKM a00x in the KSN 102a, a connection status with the adjacent KSN 102b, and route information from the BKM b00y to the destination KM b333 in the adjacent KSN 102b.

Exemplary Configuration of Large-Scale QKDN

As the QDKN grows in size and also the number of KMs 10 increases, the key sharing network (KSN) 102 is generally divided into two or more KSN domains in order to efficiently and easily manage the KSN 102. In each KSN domain, the number of KMs 10, the number of links between KMs 10, or the like is limited to within a given limit value (for example, 1000).

Note that, as described above, each KSN domain is not limited to the same standards, the same scale, or the same quantum protocol. As a division type of KSNs 102 of the same type, for example, in a case where an upper limit is set to the number of KMs or the number of links in the domain, many KMs 10 in the KSN domain have less key relay route information, which enables shortening the processing time. However, it is necessary to determine a key relay route between domains via a specific KM 10 when a key is shared with a KM 10 outside the domain.

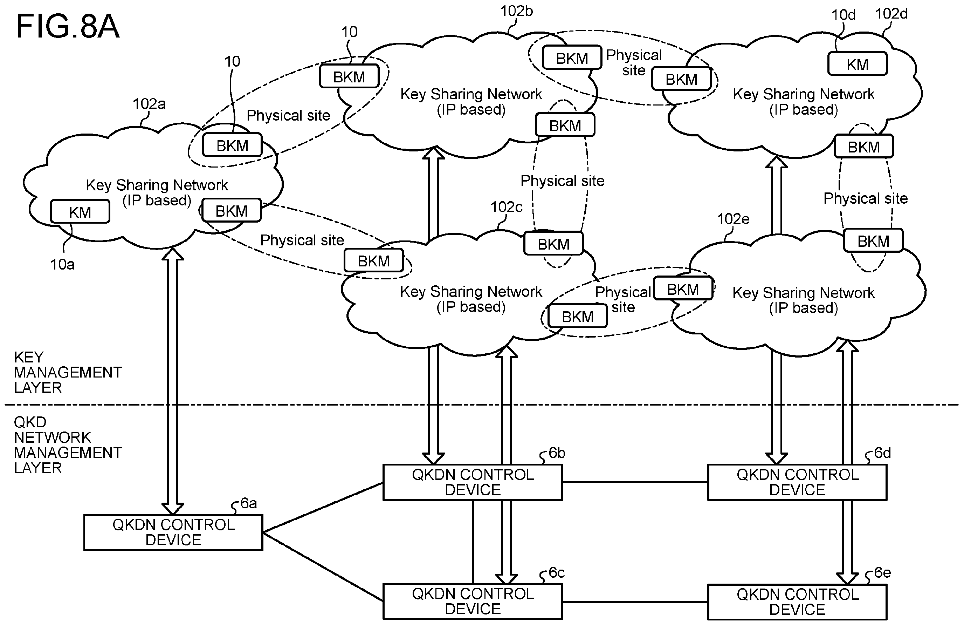

FIG. 8A is a diagram illustrating a first example of the KSN domain of the embodiment. Illustrated in FIG. 8A is a case where there are five key sharing networks 102a to 102e of the same type (five KSN domains of the same type) (in the example of FIG. 8A, IP-based). Note that the number of key sharing networks 102 and the number of QKDN control devices 6 may be any number and are not limited to the example of FIG. 8A.

The five KSN domains illustrated in FIG. 8A have an IP-based ID system. Dedicated QKDN control devices 6a to 6e in the QKD network management layer are installed for the respective key sharing networks 102a to 102e in the key management layer.

The QKDN control devices 6 periodically collect information such as a holding status of link keys among KMs 10 from the KMs 10 of the respective key sharing networks 102 and manage the collected information.

The key sharing networks 102 are connected by BKMs 10 installed at an inter-domain border. The BKMs 10 at the inter-domain border are located at physically the same location (node). Incidentally, information sharing between the BKMs 10 does not depend on the QKD links 3 used for sharing the link key.

The QKDN control devices 6a to 6e constitute a dedicated network and share the connection status among the KSNs 102 (connection information of the BKMs 10), key relay related information, and others. Links between the QKDN control devices 6a to 6e may be the QKD link 3 described above or an ordinary link that is protected by a scheme other than QKD.

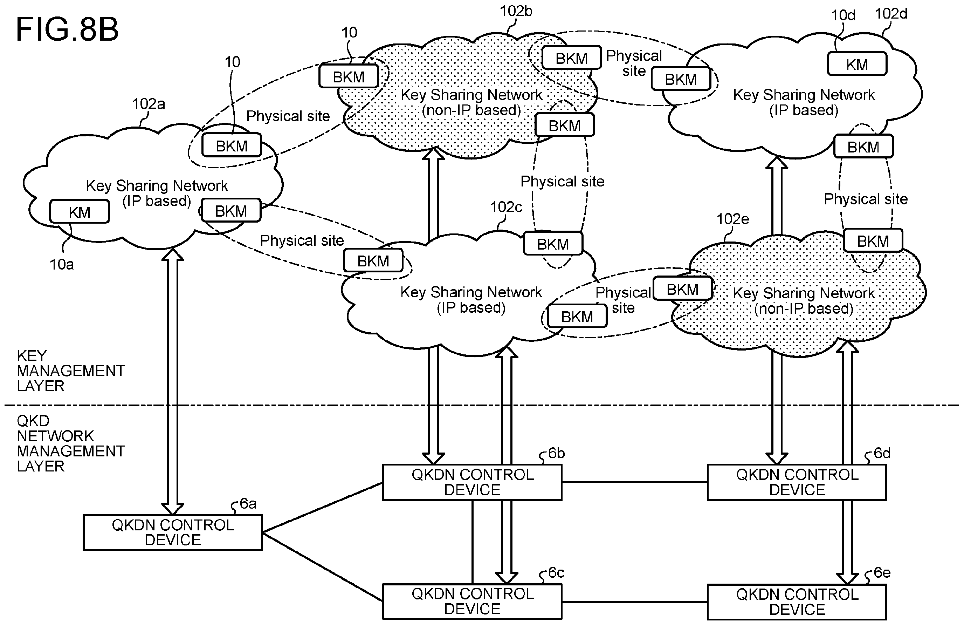

FIG. 8B is a diagram illustrating a second example of the KSN domain of the embodiment. Illustrated in FIG. 8B is an example in which different types of key sharing networks 102 are present together. In the example of FIG. 8B, there are five key sharing networks 102a to 102e. The key sharing networks 102a, 102c, and 102d are IP-based key sharing networks 102, and the key sharing networks 102b and 102e are non-IP-based key sharing networks 102. Note that the number of key sharing networks 102 and the number of QKDN control devices 6 may be any number and are not limited to the example of FIG. 8B.

In a case where secure communication is performed from an application (source) connected to a KM 10a in the KSN 102a to an application (destination) connected to a KM 10d in the KSN 102d, it is desirable to determine an efficient key relay route to the destination KM 10d via an optimal KSN 102 while avoiding key consumption and exhaustion depending on the state of the link key.

Therefore, the quantum cryptographic communication system according to the present embodiment suppresses consumption of the link key as much as possible, selects an optimal KSN domain to pass through, and determines the key relay route. As a result, it is made possible to reduce the consumption amount of the link key in the entire system while maintaining the throughput of application key sharing among the KSNs 102 while avoiding exhaustion of the link key in a specific KM 10.

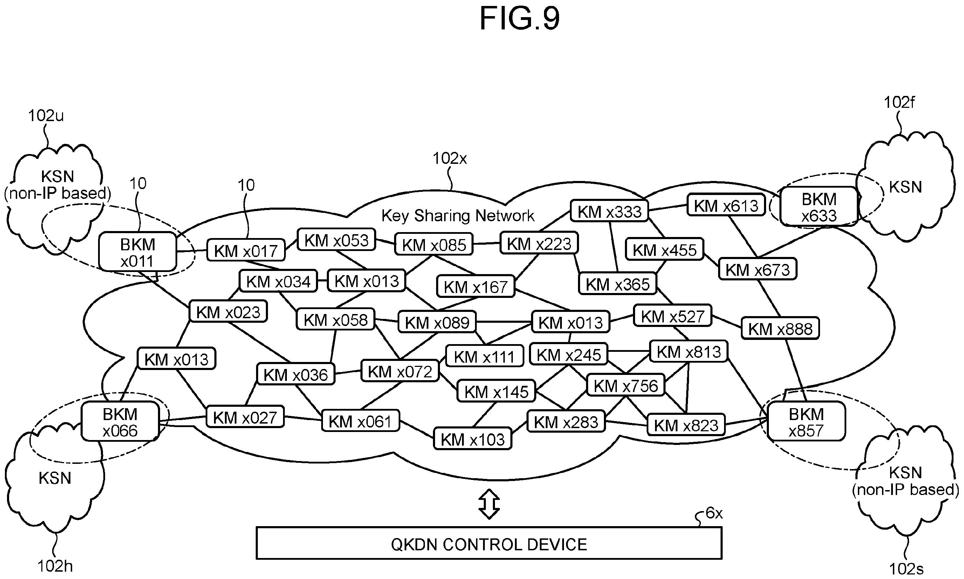

FIG. 9 is a diagram for explaining a first calculation example of the first reference value according to the embodiment. A method of calculating the first reference value used for KSN domain selection related to key relay route determination will be described using the example of FIG. 9. In FIG. 9, there are five KSNs 102, in which KSN 102h, KSN 102x, and KSN 102f are IP-based KSNs, and KSN 102u and KSN 102s are non-IP-based KSNs.

An appropriate number of KMs 10 are installed in the KSN 102x. In the example of FIG. 9, a KM 10 and a BKM 10 is assigned with identification information for identifying the KM 10. In the example of FIG. 9, in a case where each KM 10 and each BKM 10 are distinguished and described, this identification information is used in the description.

KMs 10 belonging to the KSN 102x are connected to each other by links. Four BKMs of BKM x01 1, x066, x633, and x857 are installed on the edge side of the KSN 102x, and connection is made with the four adjacent KSNs of KSN 102u, 102h, 102f, and 102s by the four BKM x011, x066, x633, and x857.

Note that the number of KMs 10, the number of links between KMs 10, the number of BKMs 10, the number of KSNs 102, and the number of QKDN control devices 6 are not limited to the example of FIG. 9.

A method of calculating the first reference value used for determining whether or not the KSN 102x is selected as the key relay route will be described. There are mainly two methods for calculating the first reference value.

First method: First reference value based on the entire KSN 102 (Option 1 to Option 4 described below)
Second method: First reference value based on a route inside the KSN 102 (Option 5 to Option 8 described below).

First, a first scheme will be described. A communication unit 61 of a QKDN control device 6x periodically acquires the remaining link key amount of a link between each pair of the KMs 10 (including the BKMs 10) in the KSN 102. The processing unit 63 of the QKDN control device 6x calculates the first reference value based on the entire KSN 102 on the basis of the remaining link key amount of all the links.

Therefore, in the first method, it is based on the premise that all the KMs 10 are connected to the QKDN control device 6x. As a method of calculating the first reference value based on the entire KSN 102x, there are calculation methods as the following Option 1 to Option 4.

Option 1

For example, a total value of the available remaining key amount of all the links in the KSN 102x is set as a first reference value O of the KSN 102x. The total value is calculated by, for example, the following Equation (2).

$$O^{own} = Sum_{KSN} = \sum_{link=1}^{i} A_i^{key} \quad \cdots (2)$$

Here, $O^{own}$ represents the first reference value of the KSN 102x. Letter i represents the number of all the links in the KSN 102x. $A_i^{key}$ denotes the available remaining key amount in a link i. In addition, since sharing an application key is bidirectional communication, there are cases where the available remaining key amount of each link is divided into for transmission (encryption) and for reception (decryption). The available remaining key amount of each link does not change; however, the application key can be efficiently shared. In this case, the available remaining key amount of one link in the above calculation formula is also a total value of two (for transmission (encryption) and for reception (decryption)).

Option 2

For example, an average value of the available remaining key amount of all the links in the KSN 102x is set as the first reference value O of the KSN 102x. The average value is calculated by, for example, the following Equation (3).

$$O^{own} = Mean_{KSN} = \frac{\sum_{link=1}^{i} A_i^{key}}{i} \quad \cdots (3)$$

Here, the meanings of $O^{own}$, i, and $A_i^{key}$ are the same as in the above Equation (2).

The following two points (1) and (2) are advantages of setting the total value (Option 1) of the available remaining key amount of all the links or the average value (Option 2) of the available remaining key amount of all the links as the first reference value O of the KSN 102x.

(1) The calculation amount of each KM 10 is small.
(2) The first reference value O can be efficiently calculated on the basis of the link key status that is periodically acquired by the QKDN control device 6x.

Meanwhile, a disadvantage is that, in a case where the available remaining key amount of a specific link is significantly different from the available remaining key amount of another link on a key relay route, the key relay speed is limited to the available remaining key amount on a link having a small remaining key amount.

For example, let us presume that the number of links in the KSN 102x is 50, that the available remaining key amount is 10 Gbits for only one link, and that the available remaining key amount is 0.001 Gbits for all the other 49 links. In this case, the first reference value based on the total value or the average value is higher than 0.001 Gbits which is the available remaining key amount that is actually available. In a case where the KSN 102x is selected on the basis of the first reference value, the key relay speed is limited to a speed based on 0.001 Gbits which is the available remaining key amount that is actually available (bottleneck).

Option 3

For example, the smallest value of the available remaining link key amounts of all links in the KSN 102x is set as the first reference value O of the KSN 102x. The smallest value is calculated by, for example, the following Equation (4).

$$O^{own} = Min_{KSN} = \min_{link \in (1,2,...,i)} \{A_1^{key}, A_2^{key}, ..., A_i^{key}\} \quad \cdots (4)$$

Here, the meanings of $O^{own}$, i, and $A_i^{key}$ are the same as in the above Equation (2).

Advantages of setting that the smallest value of the available remaining link key amounts in all the links as the first reference value O of the KSN include:

(1) The calculation amount of each KM 10 is small.
(2) The first reference value O can be efficiently calculated on the basis of the link key status that is periodically acquired by the QKDN control device 6x.
(3) In a case where the KSN 102x is selected, sharing of an application key of at least a number greater than or equal to the smallest value of the remaining link key amount is guaranteed.

On the other hand, as a disadvantage, a link having the smallest value of the remaining link key amount may not be actually used in a key relay route, and the first reference value is represented by the smallest value.

For example, in a case where an application key is shared from a KM 10 of the KSN 102u to a KM 10 of the KSN 102f via the KSN 102x, let us presume that there are five routes from the BKM x011 on the edge side connected to the KSN 102u to the BKM x633 on the edge side connected to the KSN 102f and that a bottleneck of any route has a larger remaining link key amount than that of a link having the smallest value. That is, it is based on the premise that the link having the smallest remaining link key amount is not included in any route. Even in this case, the first reference value used for determining whether or not a KSN 102x is selected is represented by the smallest value.

Option 4

For example, a median value of the available remaining key amount of all the links in the KSN 102x is set as the first reference value O of the KSN 102x. In a case where the available remaining link key amounts of individual links are rearranged in order of size, for example, $\{A'_1, A'_2, A'_3, ..., A'_i\}$ is obtained. The median value is calculated by, for example, the following Equation (5).

$$O^{own} = Median_{KSN} = \begin{cases} A'_{(i+1)/2}, if \ i \ is \ odd \\ 1/2 \left(A'_{i/2} + A'_{(i/2)+1}\right), if \ i \ is \ even \end{cases} \quad \cdots (5)$$

An advantage of setting the median value of the available remaining link key amounts of all the links to the first reference value O of the KSN 102x is that since it is a value right in the middle place, there is no influence of a value extremely higher (or lower) than the average value.

A disadvantage is that although the median remaining link key amount is used as the first reference value, in a case where the remaining link key amount of a link that is actually used in the relay route is less than the median value, only an available remaining link key amount smaller than the median value is provided in this relay route.

With the above Option 1 to Option 4, the first reference value based on the entire KSN 102x can be calculated. Note that the method for calculating the first reference value is an example, and it is not limited thereto. The first reference value may be calculated on the basis of at least one of the total value, the average value, the smallest value, and the median value of the remaining amounts of link keys held by a plurality of KMs 10 and BKMs 10 included in the KSN 102x to be determined.

In addition, since the first reference value is based on the whole, the same first reference value is obtained regardless of which KSN 102 to which KSN 102. For example, in the case of the example of FIG. 9, the same first reference value O is obtained for all of a case where key relay is performed from the KSN 102u to the KSN 102f via the KSN 102x, a case where key relay is performed from the KSN 102u to the KSN 102h via the KSN 102x, and a case where key relay is performed from the KSN 102u to the KSN 102s via the KSN 102x.

In addition, in a case where the first reference value based on the entire KSN 102x is used, there is an advantage that the calculation amount of each KM 10 (BKM 10) is small.

Next, a second scheme will be described.

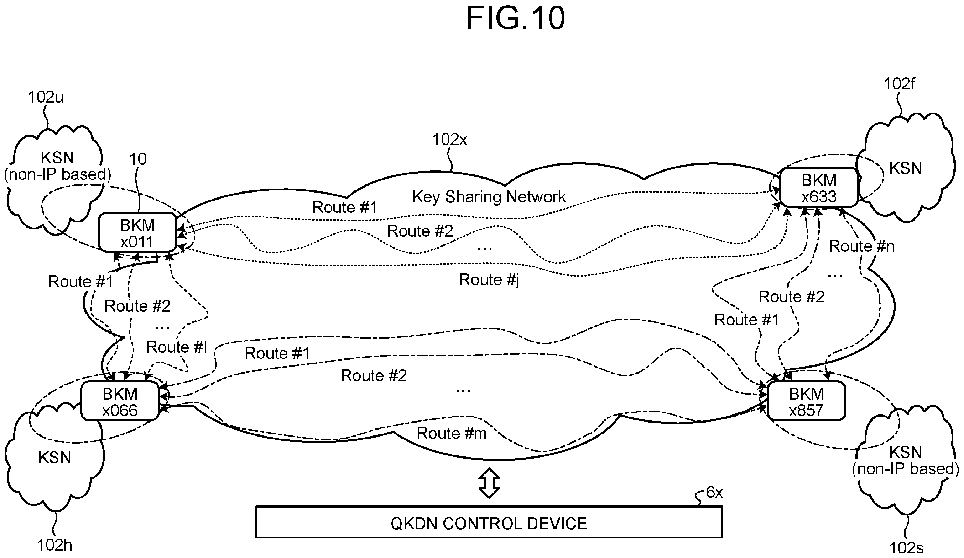

FIG. 10 is a diagram for explaining a second calculation example of the first reference value according to the embodiment. The communication unit 61 of the QKDN control device 6x periodically acquires a key relay route between BKMs 10 in the KSN 102x. The processing unit 63 of the QKDN control device 6x calculates a route-based first reference value of the KSN 102x on the basis of the key relay route in the KSN 102x.

Therefore, the processing unit 63 of the QKDN control device 6x needs to calculate a key relay route in the KSN 102x. The key relay route in the KSN 102x is determined in any routing scheme. For example, in the case where the KSN 102x is IP-based, the key relay route is selected on the basis of the bottleneck of the available remaining key amounts of the links using OSPF which is an existing routing protocol. As a route-based first reference value of the KSN 102x, there are calculation methods as the following Option 5 to Option 8.

Option 5

The value of a bottleneck of the available remaining key amounts in an optimal key relay route between BKMs 10 is set as the first reference value O of the KSN 102x, for example.

In this case, as illustrated in FIG. 10, for example, in a case where the KSN 102x is passed from the KSN 102u to the KSN 102f, there are routes #1 to #j. For example, the route #1 shares the application key via a plurality of links {$Link_1$, $Link_2$, $Link_3$, ..., $Link_k$}. The available remaining key amount of each of the links is calculated by, for example, the above calculation formula (1), and the bottleneck of the available remaining key amount $A_{route\_id}$ of the route #1 is calculated by, for example, the following calculation formula (6).

$$A_{route\_id} = \min_{k \in route\_links} \left\{ A_1^{key}, A_2^{key}, ..., A_k^{key} \right\} \quad \cdots (6)$$

In addition, the processing unit 63 also calculates the available remaining key amount $A_{route\_id}$ for the other routes #2 to #j from the BKM x011 to BKM x633, similarly to the route #1. Then, the processing unit 63 selects an optimum route from the routes #1 to #j. The optimum route is calculated by, for example, the following Equation (7).

$$O_{From,To}^{Own} = \max_{j \in routes} \left\{ A_1, A_2, ..., A_j \right\} \quad \cdots (7)$$

Here, the first reference value $O_{From, To}^{Own}$ clearly indicates a source (From), a destination (To), and a transit (Own).

For example, in a case where the bottleneck of the available remaining key amount of the route #2 is the largest among the key relay routes, the first reference value from the KSN 102u to the KSN 102f via the KSN 102x is represented by the bottleneck of the available remaining link key amount of the route #2.

Note that the available remaining link key amounts of the individual links are calculated on the KMs 10 side. Other calculations may be performed by, for example, the BKMs 10 and periodically reported to the QKDN control device 6x. Alternatively, for example, the QKDN control device 6x may periodically collect information and calculate the first reference value $O_{From, To}^{Own}$ of the optimal route.

Option 6

For example, the value of a bottleneck of the available remaining key amounts in three optimal key relay routes between BKMs 10 is set as the first reference value O of the KSN 102x. Although the calculation method is basically the same as that of Option 5, when calculating the optimum route, not only the optimum route but also bottlenecks of available remaining link key amounts of a second best route and a third best route are calculated. Then, the total value or the average value of the bottlenecks of the available remaining link key amount of the best three routes are set as the first reference value O.

When the application key is shared, one route may be used from the beginning to the end. However, in a case where the remaining amount of the application key available for links is insufficient, it is common to change to another key relay route and continue the sharing of the application key rather than waiting for replenishment of the link key.

Note that the method of calculating the first reference value O of Option 6 is more appropriate as compared with Option 5 since it is considered that the possibility of a route change is also considered. Note that the method of calculating the best three routes is an example, and the number of routes to be considered is not limited to three.

Option 5 and Option 6 are calculation methods considering only the bottleneck, however, resource information other than the bottleneck may be considered.

Option 7

For example, a reference value obtained by combining the bottleneck of the available remaining key amount and the hop count of the optimal key relay route between BKMs 10 is set as the first reference value O of the KSN 102x. In this case, as illustrated in FIG. 10, for example, in a case where the KSN 102x is passed from the KSN 102u to the KSN 102f, the route #1 of the key relay from the BKM x011 to the BKM x633 shares the application key via a plurality of links $\{Link_1, Link_2, Link_3, ..., Link_k\}$. The available remaining key amount of each link is calculated by, for example, the above calculation formula (1), and the bottleneck of the available remaining key amount $A_{route\_id}$ of the route #1 is calculated by, for example, the above calculation formula (6).

In addition, the hop count of the route #1 satisfies $H_{route} = k$. Therefore, a reference value RV of the route #1 is calculated by, for example, the following Equation (8).

$$RV_{route} = \frac{A_{route\_id} \times \alpha}{H_{route} \times \beta} \quad \cdots (8)$$

Here, $\alpha$ and $\beta$ are coefficients representing weights and are any real numbers larger than 0. The processing unit 63 also calculates the reference value RV for the other routes #2 to #j from the BKM x011 to the BKM x633 similarly to the route #1. Then, the processing unit 63 selects an optimum route from the routes #1 to #j. The optimum route is calculated by, for example, the following Equation (9).

$$O_{From,To}^{Own} = \max_{j \in routes} \{RV_1, RV_2, ..., RV_j\} \quad \cdots (9)$$

Option 8

Similarly to Option 6, according to the calculation method of Option 7, for example, a reference value obtained by combining the bottleneck of the available remaining link key amount and the hop count of not only the optimum route but also a second best route and a third best route is calculated. Then, the total value or the average value of reference values obtained by combining the bottleneck of the available remaining link key amount and the hop count of the three best routes is set as the first reference value. Note that the method of calculating the best three routes is an example, and the number of routes to be considered is not limited to three.

Each of the above-described Option 5 to Option 8 enables calculation of a route-based first reference value O of the KSN 102x. The method of calculating the first reference value by Options 5 to 8 is an example, and it is not limited thereto. For example, the first reference value may be calculated on the basis of at least one of the bottleneck of the remaining amount of link keys used in links included in a route in the KSN 102x to be determined and the hop count of the links included in the route. The bottleneck of the remaining link key amount may be calculated on the basis of at least one of the total value and the average value of the bottlenecks of the remaining amounts of the link key used in links of a plurality of route candidates included in the KSN 102x to be determined. Moreover, for example, the first reference value may be calculated further on the basis of at least one of the total value and the average value of the hop counts of the links included in the plurality of route candidates.

As compared with the first method, the calculation amount of the BKMs 10 is larger, and a route actually used is different due to a difference between the source KSN 102 and the destination KSN 102, and thus the calculated first reference value of the KSN 102x is also different. Therefore, a more optimal key relay route can be selected.

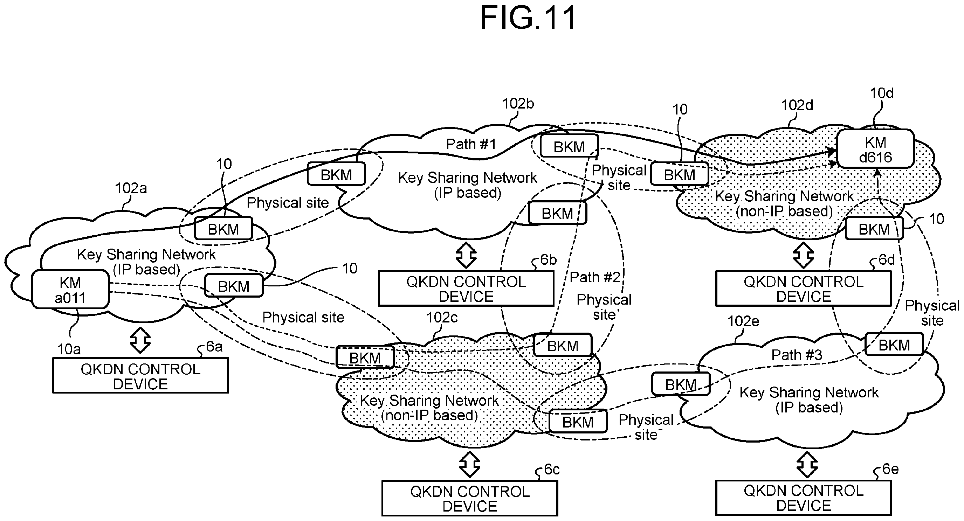

FIG. 11 is a diagram for describing an example of a method of determining a key relay route according to the embodiment. In the example of FIG. 11, a case where the application key is shared from a KM a011 (KM 10a) belonging to a KSN 102a to a KM d616 (KM 10d) belonging to a KSN 102d will be described.

First, QKDN control devices 6 dedicated to respective KSNs 102 collect information used for determining a key relay route. For example, in the case of the KSN 102a, a QKDN control device 6#a is notified of a reference value RV from the source KM (KM a011) to BKMs 10 in the KSN domain of the KSN 102a.

Similarly, in the case of the KSN 102d, a QKDN control device 6#d is notified of a reference value RV from BKMs 10 to the destination KM 10 in the KSN domain of the KSN 102d.

In addition, the processing units 63 of the QKDN control devices 6 of the KSN domains of the KSNs 102 that are passed through calculate the first reference value O according to the above calculation method. Next, the QKDN control devices 6 each share route related information (for example, KSN domain information to which the KMs 10 belong, connection status between the KSNs 102, and the first reference value used for determining whether or not each KSN 102 is passed through).

Finally, the processing unit 63 of the QKDN control device 6a determines a route on the basis of, for example, the largest second reference value among the key relay routes. That is, in a case where a plurality of KSNs 102 to be passed through is included in the relay route of the application key, the processing unit 63 calculates a second reference value used for determining the plurality of KSNs 102 to be passed through when the application key is transmitted from the first reference value of each of the KSNs 102 and determines the relay route on the basis of the second reference values.

The second reference value will be described below.

For example, let us presume that the key relay is performed by a route via a plurality of KSN domains {KSNi, $KSN_2$, $KSN_3$, ..., $KSN_q$}. The number of KSN domains passed through is q = Σ KSNs. Here, a KSN 102 to which a source KM 10 belongs and a KSN 102 to which a destination KM 10 belongs are also included. In the example of FIG. 11, in the case of Path #1, since the path passes through a KSN 102b, q = 3 including KSN 102a and KSN 102d.

The second reference value of the route passing through the plurality of KSN domains is calculated by, for example, a determination method (1) by Equation (10) shown below.

Determination method (1): A bottleneck of the first reference values of all KSNs 102 passed through is set as the second reference value of the key relay route.

$$Path_z^{key} = \min_{q \in KSNs} \left\{ O_{KSN_1}, O_{KSN_1,KSN_3}^{KSN_2}, ..., O_{KSN_{(q-2)},KSN_q}^{KSN_{(q-1)}}, O_{KSN_q} \right\} \quad \cdots (10)$$

Here, $O_{KSN1}$ represents a reference value of the KSN 102 to which the source KM 10 belongs. $O_{KSNq}$ represents a reference value of the KSN 102 to which the destination KM 10 belongs. Processing units 63 of QKDN control devices 6 calculate the first reference values $O_{From, To}^{Own}$ of other KSNs 102 passed through by, for example, using the above eight types of options.

Determination method (2): The average value of reference values of the KSN 102 to which the source KM 10 belongs and the KSN 102 to which the destination KM 10 belongs and the first reference values of all the KSNs 102 to be passed is calculated by the following Equation (11), and the average value is set as the second reference value of the key relay route.

$$Path_z^{key} = \frac{\left( \sum_{r=1}^{q} O_{KSN_r} \right)}{q} \quad \cdots (11)$$

In the example of FIG. 11, the processing unit 63 of the QKDN control device 6a calculates the second reference values of Path #1, Path #2, and Path #3 by the above two determination methods. Then, the processing unit 63 of the QKDN control device 6 determines the optimum key relay route by, for example, the following Equation (12).

$$Path_{optimal}^{key} = \max_{z \in paths} \{ Path_1, Path_2, ..., Path_z \} \quad \cdots (12)$$

Note that the above calculation formulas are examples, and calculation formulas are not limited thereto. For example, the second reference value may be calculated on the basis of at least one of the bottleneck and the average value of the first reference values of the plurality of KSNs 102 to be passed through.

Exemplary QKDN Control Method

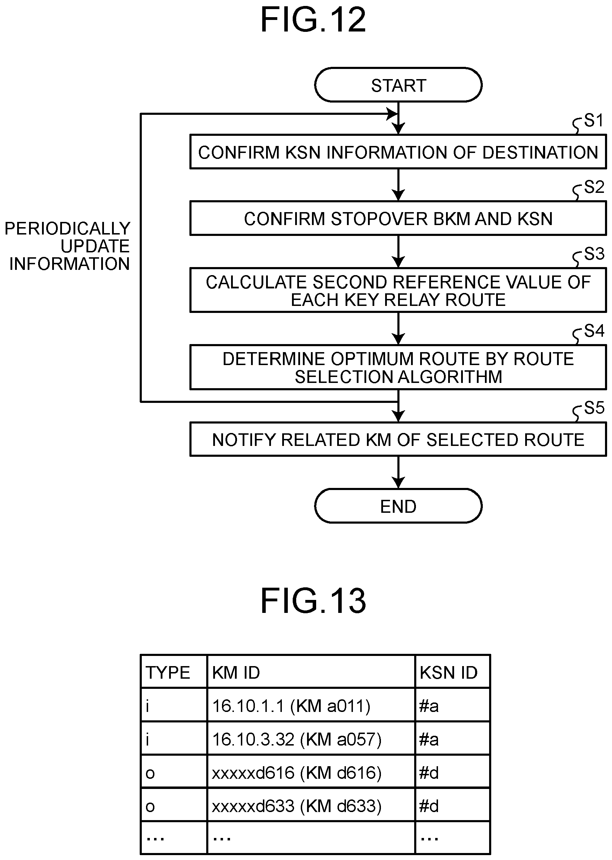

FIG. 12 is a flowchart illustrating an example of a QKDN control method according to an embodiment. A QKDN control device 6 periodically collects information used for determining a key relay route from KMs 10 of a KSN 102 managed by the QKDN control device 6. Moreover, QKDN control devices 6 periodically share information used for determining a key relay route.

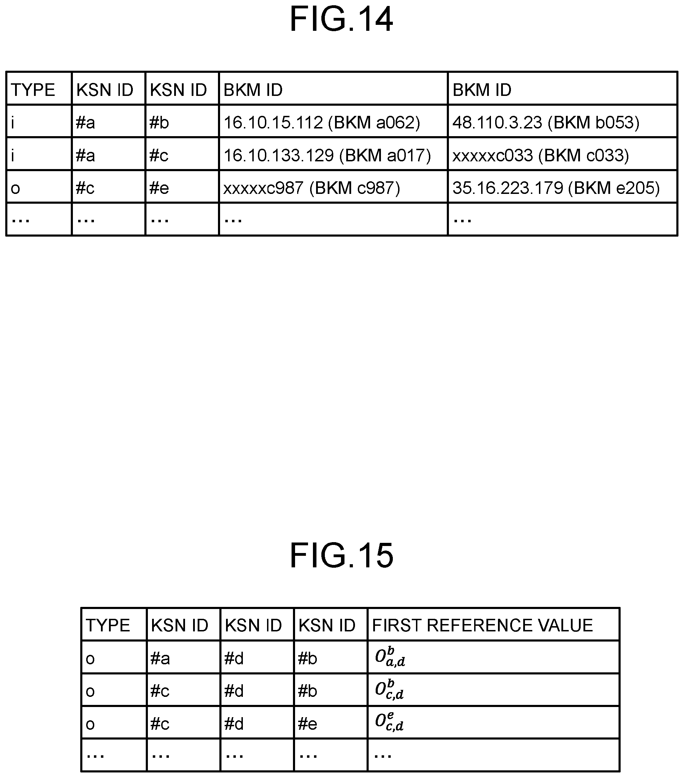

First, when there is a request to share an application key between KMs 10, the processing unit 63 of the QKDN control device 6 refers to a table of affiliation information of the KMs 10 (FIG. 13 to be described later) and confirms KSN information of the destination (the destination KM 10 and the destination KSN 10) (step S1). Next, the processing unit 63 refers to a table of connection status information (FIG. 14 to be described later) and confirms BKMs 10 and KSNs 102 passed through to the destination KM 10 (step S2).

Next, the processing unit 63 calculates the second reference value of each key relay route by referring to a table of first reference value information (FIG. 15 to be described later) (step S3). Next, the processing unit 63 determines the optimal key relay route according to the calculated second reference values (step S4). The optimal key relay route determination up to step S4 fluctuates by periodic information update.

Lastly, when the optimum key relay route is determined, the processing unit 63 transmits key relay route related information to related KMs 10 via the network among the QKDN control devices 6 (step S5).

Note that the processing unit 63 can confirm which BKMs 10 and KSNs 102 are to be passed in the key relay route to the destination KM 10 by referring to a connection information table. A key relay route between BKMs 10 in a KSN 102 to be passed through follows a routing scheme of each KSN 102.

FIG. 13 is a diagram illustrating an example of affiliation information of the embodiment. The table illustrated in FIG. 13 is a table of the QKDN control device 6a. This table mainly includes three parts, the type, the KM ID, and the KSN ID. The type is divided into two types. ID information collected and registered from KMs 10 belonging to each KSN 102 is assigned "i" as inside information. Meanwhile, ID information shared and registered among QKDN control devices 6 is assigned "o" as outside information.

ID information of KM a011 is, for example, 16.10.1.1 in the case of an IPv4 address. For example, ID of the KSN 102 is #a in the case of the KSN 102a to which the KM a011 belongs. ID information of a KM 10 may include only the ID of the KM 10 or may also include the ID of the KSN 102. In the example of FIG. 13, the KM a01 1 represents an IP-based ID system, whereas the KM d616 represents a non-IP-based ID system.

FIG. 14 is a table illustrating an example of connection status information of the embodiment. The table illustrated in FIG. 14 is a table of the QKDN control device 6#a. This table mainly includes five parts of the type, a set of IDs of connected KSNs, and a set of IDs of connected BKMs. Since the type is the same as that in FIG. 13, description thereof is omitted.

Describing a first row of FIG. 14 as an example, the KSN 102a and the KSN 102b are connected by a BKM a062 and a BKM b053. The information of the first row is, for example, acquired from the BKM a062.

FIG. 15 is a table illustrating an example of first reference value information of the embodiment. The table illustrated in FIG. 15 is created from the information shared among the QKDN control devices 6. This table mainly includes five parts of the type, the ID of a KSN 102 as a start point, the ID of a KSN 102 to be passed through, the ID of a KSN 102 as an end point, and the first reference value. Describing a second row and a third row of FIG. 15 as examples, in a case where a key relay route is determined from a KSN 102c to the KSN 102d, the second row indicates that the first reference value is $O^b_{c,d}$ if the KSN 102b is passed through, and the third row indicates that the first reference value is $O^e_{c,d}$ if a KSN 102e is passed through.

When the key relay route is determined, the KMs 10 share the application key. There are two types of message structure examples depending on whether or not there is an interaction with a QKDN control device 6 during the key relay.

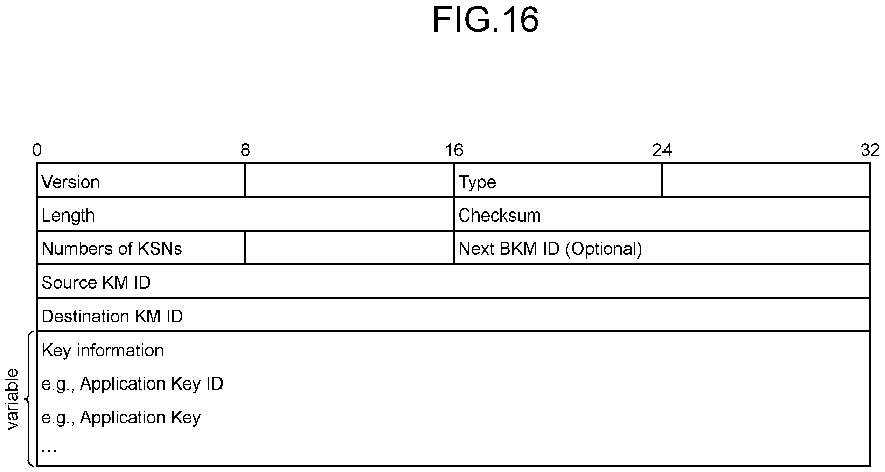

FIG. 16 is a diagram illustrating a first example of a header format of a key relay message of the embodiment. FIG. 16 illustrates an example of a header format of a key relay message in a case where the QKDN control devices 6 communicate with each other. The header part includes six fields.

Version is a field indicating the version of the KM 10. For example, 0x04 is stored in Version for IPv4, 0x06 is stored in Version for IPv6, and 0x10 is stored in Version for non-IP.

Type is a field indicating the type of the message. For example, in a case where key relay in the KSN 102 is performed, 0x01 is stored in Type, and in a case where key relay is performed via the KSN 102, 0x10 is stored in Type.

Length is a field indicating the length of the message.

Checksum is a field for the error check.

Numbers of KSNs is a field indicating the number of KSNs 102 related to the key relay route and includes the KSN 102 to which the source KM 10 belongs and the KSN 102 to which the destination KM 10 belongs.

Next BKM ID (Optional) is a field indicating the ID of a BKM 10 of the KSN 102 to be passed next.

Source KM ID is a field indicating ID information of the source KM 10.

Destination KM ID is a field indicating ID information of the destination KM.

Key information is a field indicating application key information. For example, the ID of an application key, an application key corresponding to the ID, or the like is stored in Key information.

Note that the QKDN control device 6 inquires a corresponding QKDN control device 6 about the BKM ID of the KSN 102 to be passed next and updates the field of Next BKM ID by confirming the next BKM 10. This field is not used in a case where key relay inside the KSN 102 is performed.

In addition, Key information field conforms to, for example, ETSI GS QKD 014, "Quantum Key Distribution (QKD); Protocol and data format of REST-based key delivery API," 2019.

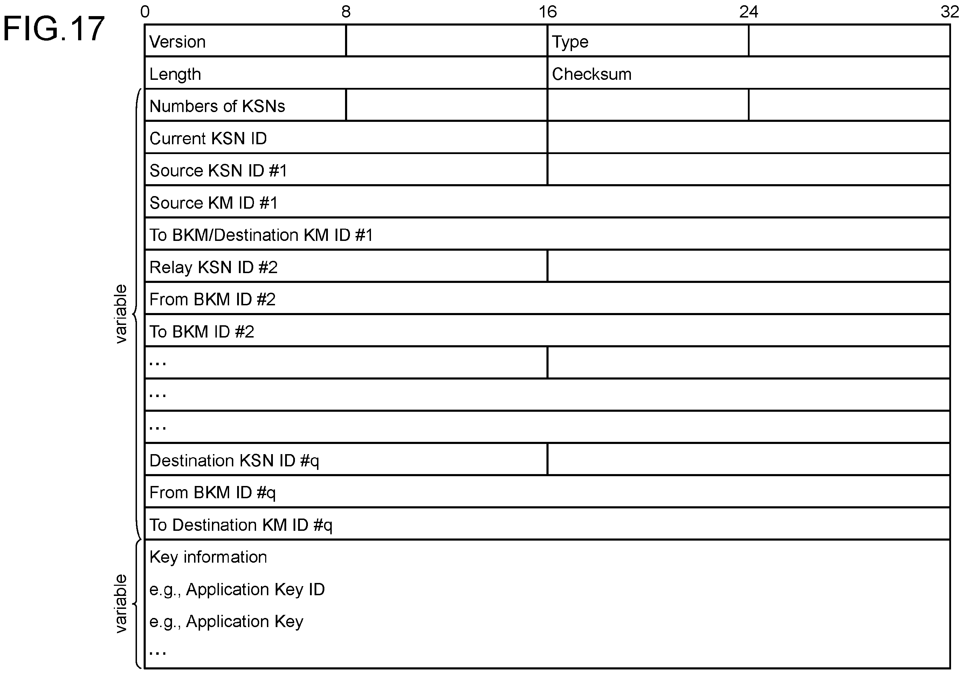

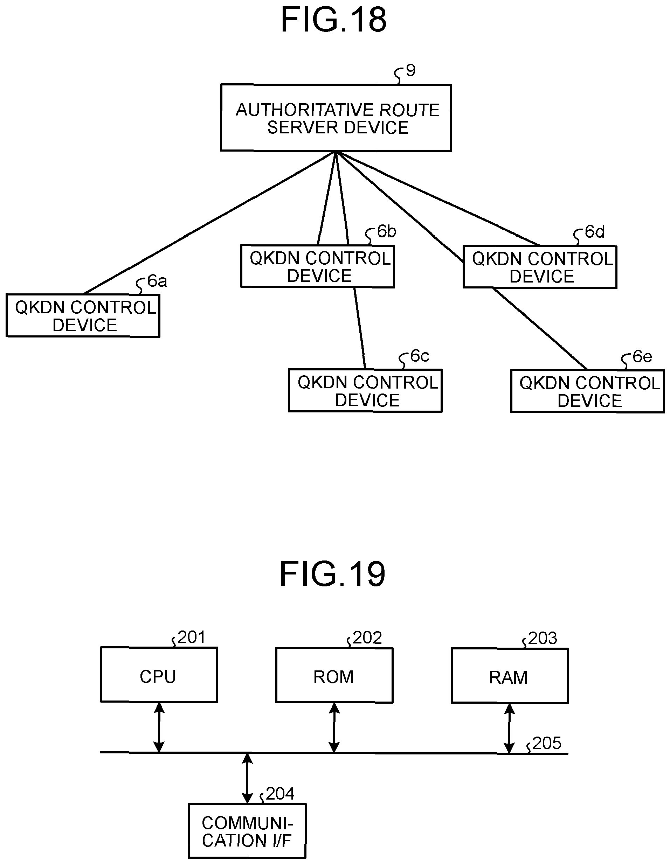

FIG. 17 is a diagram illustrating a second example of the header format of a key relay message of the embodiment. FIG. 17 is an example of a header format of a key relay message in a case where there is no interaction among the QKDN control devices 6. In a case where a key relay route is determined, route information is included in the header. In the example of FIG. 18, the route information part is added as compared with FIG. 16. The route information part mainly includes the following fields.

Numbers of KSNs is a field indicating the number of KSNs 102 related to the key relay route and includes the KSN 102 to which the source KM 10 belongs and the KSN 102 to which the destination KM 10 belongs.

Current KSN ID is a field indicating which KSN 102 is currently performing key relay of the application key.

Source KSN ID is a field representing the ID of the KSN 102 to which the source KM 10 belongs.

Source KM ID is a field representing the ID of the source KM 10.

Relay KSN ID is a field representing the ID of a KSN 102 through which the key relay route passes.

From BKM ID is a field representing the ID of the start point BKM 10 of the KSN 102 that the key relay route passes through.

To BKM ID is a field representing the ID of the end point BKM 10 of the KSN 102 that the key relay route passes through.

Destination KSN ID is a field representing the ID of the KSN 102 to which the destination KM 10 belongs.

Destination KM ID is a field representing the ID of the destination KM 10.

Note that there may be two or more of: Relay KSN IDs, From BKM IDs, and To BKM IDs, each depending on the number of KSNs 102 to be passed through.

Note that, in a case of not interacting with the QKDN control device 6, the overhead increases depending on the amount of application keys. On the other hand, communication with the QKDN control device 6 becomes unnecessary, which can reduce a delay.

FIG. 18 is a diagram illustrating an example of the configuration of centralized management according to the embodiment. In the example of FIG. 18, the QKDN control devices 6 are connected to an authoritative route server device 9. Related information such as the affiliation information, the connection status information, and the first reference value information (FIGS. 13 to 15) is integrally managed by the authoritative route server device 9. When an application key is requested from the application 5 in the user network, a QKDN control device 6 inquires of the authoritative route server device 9 for related information. The QKDN control device 6 determines the key relay route on the basis of a response message from the authoritative route server device 9.

Regarding information update of the authoritative route server device 9, in a case where the information is constantly updated, a sequence number is assigned that matches for the authoritative route server device 9 and the QKDN control devices 6. In a case where the information of the authoritative route server device 9 is updated only when a key relay route is determined, related QKDN control devices 6 notify the authoritative route server device 9 of the latest information when there is an inquiry about determination of the key relay route.

Note that links between the authoritative route server device 9 and the QKDN control devices 6 may be the QKD link 3 or may be an ordinary link protected by a scheme other than QKD.

As described above, for example, in the KM 10a of the embodiment, the communication unit 11 (an example of a communication interface) receives, from the QKDN control device 6a, route information for transmitting the application key used for encrypting or decrypting communication in the user network to the destination KM 10. Then, the processing unit 13 identifies a BKM 10 that is located in the KSN 102a (an example of a first key sharing network) to which the KM 10a connected to the application 5a belongs and is connected to the KSN 102b (an example of a second key sharing network) from the route information. The processing unit 13 determines a route in the KSN 102a from the KM 10a connected to the application 5a to the BKM 10 connected to the KSN 102b, on the basis of the resource information of the KSN 102a. The processing unit 13 then causes the communication unit 11 to transmit the application key encrypted with the link key by using the route.

In the QKDN control device 6a according to the embodiment, the processing unit 63 calculates the first reference value used for determining the KSN 102d to be passed through at the time of transmitting the application key from the KM 10a (an example of the first key manager) belonging to the KSN 102a to the KM 10d (an example of a second key manager) belonging to the KSN 102d (an example of the second key sharing network). The processing unit 63 determines the KSN 102 to be passed through when the application key is transmitted from the KM 10a to the KM 10d on the basis of the first reference value. Then, the communication unit 61 (an example of the communication interface) transmits, to the KM 10a, the route information representing the KSN 102 to be passed through.

Therefore, according to the quantum cryptographic communication system of the embodiment, it is possible to determine the optimum route for transmitting an encryption key regardless of the scale of the QKD network.

An example of the hardware configuration of the KM 10, the QKDN control device 6, and the information processing device 8 according to the present embodiment will be described.

Exemplary Hardware Configuration

FIG. 19 is a diagram illustrating an example of the hardware configuration of the KM 10, the QKDN control device 6, and the information processing device 8 according to the embodiment. The KM 10, the QKDN control device 6, and the information processing device 8 include a control device such as a CPU 201, a storage device such as a read only memory (ROM) 202 and a RAM 203, and a communication I/F 204 that is connected to a network and performs communication. The CPU 201, the ROM 202, the RAM 203, and the communication I/F 204 are connected by a bus 205.

For example, programs executed by the KM 10, the QKDN control device 6, and the information processing device 8 are provided by being incorporated in the ROM 202 or the like in advance.

Moreover, for example, the programs executed by the KM 10, the QKDN control device 6, and the information processing device 8 may be provided as a computer program product by being recorded in a computer-readable recording medium such as a compact disk read only memory (CD-ROM), a flexible disk (FD), a compact disk recordable (CD-R), or a digital versatile disk (DVD) as a file in an installable format or an executable format.

Alternatively, the programs executed by the KM 10, the QKDN control device 6, and the information processing device 8 may be provided by being stored in a computer connected to a network such as the Internet and allowing download via the network. Alternatively, the programs executed by the KM 10, the QKDN control device 6, and the information processing device 8 may be provided or distributed via a network such as the Internet.

The programs executed by the KM 10, the QKDN control device 6, and the information processing device 8 can cause a computer to function as components of the KM 10, the QKDN control device 6, and the information processing device 8 described above. In this computer, the CPU 201 can read the programs from a computer-readable storage medium onto a main storage device such as the RAM 203 and execute the programs.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

A key manager (10) connected to a quantum key distribution (QKD) device (2) generating a link key by QKD, an application (5) of a user network, and a quantum key distribution network (QKDN) control device (6), the key manager (10) comprising:

a communication interface (11) configured to receive route information from the QKDN control device, the route information representing a route for transmitting, to a destination key manager, an application key used for encrypting or decrypting communication in the user network; and
a processing unit (13) configured to

identify a key manager from the route information, the key manager to be identified being located in a first key sharing network (102a) to which the key manager connected to the application belongs and being connected to a second key sharing network (102b),
determine a route in the first key sharing network from the key manager connected to the application to the key manager connected to the second key sharing network, the route being determined on the basis of resource information of the first key sharing network, and
cause the communication interface to transmit the application key encrypted with the link key by using the route.

(Technical scheme 2)

The key manager according to the technical scheme 1, wherein

the resource information includes state information of the link key calculated on the basis of at least one of a generation rate, a holding amount, and a consumption rate of the link key, each being calculated for each of the links included in a candidate of the route, and
the processing unit (13) is configured to

calculate, for each of the links included in the candidate of the route, a value calculated from at least one of the generation rate, the holding amount, and the consumption rate of the link key on the basis of the state information of the link key used in the link included in the candidate of the route,
specify, as a bottleneck of the links, a link for which the value is smallest, and
determine the route on the basis of the bottleneck of the links included in the candidate of the route.

(Technical scheme 3)

The key manager according to the technical scheme 2, wherein

the resource information further includes a hop count to the key manager connected to the second key sharing network (102a), the hop count being calculated for each candidate of the route, and
the processing unit (13) is configured to perform the determination of the route further on the basis of the hop count.

(Technical scheme 4)

A quantum key distribution network (QKDN) control device (6) connected to a first key manager (10a) transmitting, to an application, an application key used for encrypting or decrypting communication between applications in a user network, the QKDN control device (6) comprising:

a processing unit (63) configured to

calculate a first reference value used for determining a key sharing network through which the application key is transmitted from the first key manager (10a) belonging to a first key sharing network (102a) to a second key manager (10b) belonging to a second key sharing network (102b), and
determine, on the basis of the first reference value, the key sharing network through which the application key is transmitted from the first key manager to the second key manager; and

a communication interface (61) configured to transmit, to the first key manager, route information representing the key sharing network to be passed through.

(Technical scheme 5)

The QKDN control device according to the technical scheme 4, wherein

the first reference value is used for at least one of encryption and decryption of communication of a link included in the key sharing network to be determined, and
the first reference value is calculated on the basis of at least one of a total value, an average value, a smallest value, and a median value of remaining amounts of link keys held by a plurality of key managers included in the key sharing network to be determined.

(Technical scheme 6)

The QKDN control device according to the technical scheme 4, wherein the first reference value is calculated on the basis of at least one of

a bottleneck of a remaining amount of a link key used in a link included in a route of the key sharing network to be determined, and
a hop count of the link included in the route.

(Technical scheme 7)

The QKDN control device according to the technical scheme 4, wherein the first reference value is calculated on the basis of at least one of a total value and an average value of bottlenecks of remaining amounts of a link key used in links of a plurality of route candidates included in the key sharing network to be determined.

(Technical scheme 8)

The QKDN control device according to the technical scheme 7, wherein the first reference value is calculated further on the basis of at least one of a total value and an average value of hop counts of links included in the plurality of route candidates.

(Technical scheme 9)

The QKDN control device according to any one of the technical schemes 4 to 8, wherein the processing unit (63) is configured to, in a case where two or more of the key sharing networks to be passed through are included in a relay route of the application key,

calculate a second reference value used for determining the two or more of the key sharing networks to be passed through when the application key is transmitted, the second reference value being calculated from a first reference value of each of the key sharing networks, and
determine the relay route on the basis of the second reference value.

(Technical scheme 10)

The QKDN control device according to the technical scheme 9, wherein the second reference value is calculated on the basis of at least one of a bottleneck and an average value of the first reference values of the two or more of the key sharing networks to be passed through.

(Technical scheme 11)

A quantum cryptographic communication system comprising:

a first QKDN control device (6a) being the QKDN control device according to any one of the technical schemes 4 to 8;
the first key manager (10a) belonging to the first key sharing network (102a);
a first application (A) configured to receive the application key from the first key manager;
the second key manager (10b) belonging to the second key sharing network (102b);
a second QKDN control device (6b) connected to the second key manager; and
a second application (B) configured to receive the application key from the second key manager.

(Technical scheme 12)

The quantum cryptographic communication system according to the technical scheme 11, further comprising a first QKD device (2) and a second QKD device (2) each configured to generate a link key by QKD, wherein

the first QKD device is configured to transmit the link key to the first key manager (10a), and
the second QKD device is configured to transmit the link key to the second key manager (10b).

(Technical scheme 13)

An information processing device (8) comprising:

a communication interface (81) configured to receive an application key used for encrypting or decrypting communication with a destination application in a user network, the application key being received from a first key manager connected to a QKD device generating a link key by quantum key distribution (QKD); and
a processing unit (83) configured to encrypt communication with the destination application by causing a source application to operate,
wherein the application key

is encrypted by the link key and transmitted to the second key manager by using route information determined on the basis of a first reference value used for determining a key sharing network, through which the application key is transmitted from the first key manager belonging to a first key sharing network to a second key manager belonging to a second key sharing network, and

is transmitted from the second key manager to the destination application.

(Technical scheme 14)

A key management method implemented by a computer as a key manager (10), the key manager being connected to a quantum key distribution (QKD) device (2) generating a link key by QKD, an application (5) of a user network, and a quantum key distribution network (QKDN) control device (6), the key management method comprising:

receiving route information from the QKDN control device, the route information representing a route for transmitting, to a destination key manager, an application key used for encrypting or decrypting communication in the user network; and

identifying a key manager from the route information, the key manager to be identified being located in a first key sharing network (102a) to which the key manager connected to the application belongs and being connected to a second key sharing network (102b);

determining a route in the first key sharing network from the key manager connected to the application to the key manager connected to the second key sharing network, the route being determined on the basis of resource information of the first key sharing network; and

causing a communication interface to transmit the application key encrypted with the link key by using the route.

(Technical scheme 15)

A quantum key distribution network control (QKDN) method implemented by a computer as a QKDN control device (6), the QKDN control device being connected to a first key manager (10a) transmitting, to an application, an application key used for encrypting or decrypting communication between applications in a user network, the QKDN control method comprising:

calculating a first reference value used for determining a key sharing network through which the application key is transmitted from the first key manager (10a) belonging to a first key sharing network (102a) to a second key manager (10b) belonging to a second key sharing network (102b);

determining, on the basis of the first reference value, the key sharing network through which the application key is transmitted from the first key manager to the second key manager; and

transmitting, to the first key manager, route information representing the key sharing network to be passed through.

(Technical scheme 16)

An information processing method implemented by a computer as an information processing device, the method comprising:

receiving an application key used for encrypting or decrypting communication with a destination application in a user network, the application key being received from a first key manager connected to a QKD device generating a link key by quantum key distribution (QKD); and

encrypting communication with the destination application by causing a source application to operate, wherein the application key

is encrypted by the link key and transmitted to the second key manager by using route information determined on the basis of a first reference value used for determining a key sharing network, through which the application key is transmitted from the first key manager belonging to a first key sharing network to a second key manager belonging to a second key sharing network, and

is transmitted from the second key manager to the destination application.

(Technical scheme 17)

A computer program executed by a computer as a key manager (10), the key manager being connected to a quantum key distribution (QKD) device (2) generating a link key by QKD, an application (5) of a user network, and a quantum key distribution network (QKDN) control device (6), the computer program causing the computer to execute processing of:

receiving route information from the QKDN control device, the route information representing a route for transmitting, to a destination key manager, an application key used for encrypting or decrypting communication in the user network; and

identifying a key manager from the route information, the key manager to be identified being located in a first key sharing network (102a) to which the key manager connected to the application belongs and being connected to a second key sharing network (102b);

determining a route in the first key sharing network from the key manager connected to the application to the key manager connected to the second key sharing network, the route being determined on the basis of resource information of the first key sharing network; and

causing a communication interface to transmit the application key encrypted with the link key by using the route.

(Technical scheme 18)

A computer program executed by a computer as a quantum key distribution network (QKDN) control device (6), the QKDN control device being connected to a first key manager (10a) transmitting, to an application, an application key used for encrypting or decrypting communication between applications in a user network, the computer program causing the computer to execute processing of:

calculating a first reference value used for determining a key sharing network through which the application key is transmitted from the first key manager (10a) belonging to a first key sharing network (102a) to a second key manager (10b) belonging to a second key sharing network (102b);

determining, on the basis of the first reference value, the key sharing network through which the application key is transmitted from the first key manager to the second key manager; and

transmitting, to the first key manager, route information representing the key sharing network to be passed through.

## Claims

1. A key manager (10) connected to a quantum key distribution (QKD) device (2) generating a link key by QKD, an application (5) of a user network, and a quantum key distribution network (QKDN) control device (6), the key manager (10) comprising:

a communication interface (11) configured to receive route information from the QKDN control device, the route information representing a route for transmitting, to a destination key manager, an application key used for encrypting or decrypting communication in the user network; and
a processing unit (13) configured to

identify a key manager from the route information, the key manager to be identified being located in a first key sharing network (102a) to which the key manager connected to the application belongs and being connected to a second key sharing network (102b),
determine a route in the first key sharing network from the key manager connected to the application to the key manager connected to the second key sharing network, the route being determined on the basis of resource information of the first key sharing network, and
cause the communication interface to transmit the application key encrypted with the link key by using the route.

2. The key manager according to claim 1, wherein

the resource information includes state information of the link key calculated on the basis of at least one of a generation rate, a holding amount, and a consumption rate of the link key, each being calculated for each of the links included in a candidate of the route, and
the processing unit (13) is configured to

calculate, for each of the links included in the candidate of the route, a value calculated from at least one of the generation rate, the holding amount, and the consumption rate of the link key on the basis of the state information of the link key used in the link included in the candidate of the route,
specify, as a bottleneck of the links, a link for which the value is smallest, and
determine the route on the basis of the bottleneck of the links included in the candidate of the route.

3. The key manager according to claim 2, wherein

the resource information further includes a hop count to the key manager connected to the second key sharing network (102a), the hop count being calculated for each candidate of the route, and
the processing unit (13) is configured to perform the determination of the route further on the basis of the hop count.

4. A quantum key distribution network (QKDN) control device (6) connected to a first key manager (10a) transmitting, to an application, an application key used for encrypting or decrypting communication between applications in a user network, the QKDN control device (6) comprising:

a processing unit (63) configured to

calculate a first reference value used for determining a key sharing network through which the application key is transmitted from the first key manager (10a) belonging to a first key sharing network (102a) to a second key manager (10b) belonging to a second key sharing network (102b), and
determine, on the basis of the first reference value, the key sharing network through which the application key is transmitted from the first key manager to the second key manager; and

a communication interface (61) configured to transmit, to the first key manager, route information representing the key sharing network to be passed through.

5. The QKDN control device according to claim 4, wherein

the first reference value is used for at least one of encryption and decryption of communication of a link included in the key sharing network to be determined, and
the first reference value is calculated on the basis of at least one of a total value, an average value, a smallest value, and a median value of remaining amounts of link keys held by a plurality of key managers included in the key sharing network to be determined.

6. The QKDN control device according to claim 4, wherein the first reference value is calculated on the basis of at least one of

a bottleneck of a remaining amount of a link key used in a link included in a route of the key sharing network to be determined, and
a hop count of the link included in the route.

7. The QKDN control device according to claim 4, wherein the first reference value is calculated on the basis of at least one of a total value and an average value of bottlenecks of remaining amounts of a link key used in links of a plurality of route candidates included in the key sharing network to be determined.

8. The QKDN control device according to claim 7, wherein the first reference value is calculated further on the basis of at least one of a total value and an average value of hop counts of links included in the plurality of route candidates.

9. The QKDN control device according to any one of claims 4 to 8, wherein the processing unit (63) is configured to, in a case where two or more of the key sharing networks to be passed through are included in a relay route of the application key,

calculate a second reference value used for determining the two or more of the key sharing networks to be passed through when the application key is transmitted, the second reference value being calculated from a first reference value of each of the key sharing networks, and
determine the relay route on the basis of the second reference value.

10. The QKDN control device according to claim 9, wherein the second reference value is calculated on the basis of at

EP 4 436 099 A1

least one of a bottleneck and an average value of the first reference values of the two or more of the key sharing networks to be passed through.

11. A quantum cryptographic communication system comprising:

a first QKDN control device (6a) being the QKDN control device according to any one of claims 4 to 8;
the first key manager (10a) belonging to the first key sharing network (102a);
a first application (A) configured to receive the application key from the first key manager;
the second key manager (10b) belonging to the second key sharing network (102b);
a second QKDN control device (6b) connected to the second key manager; and
a second application (B) configured to receive the application key from the second key manager.

12. The quantum cryptographic communication system according to claim 11, further comprising a first QKD device (2) and a second QKD device (2) each configured to generate a link key by QKD, wherein

the first QKD device is configured to transmit the link key to the first key manager (10a), and
the second QKD device is configured to transmit the link key to the second key manager (10b).

13. An information processing device (8) comprising:

a communication interface (81) configured to receive an application key used for encrypting or decrypting communication with a destination application in a user network, the application key being received from a first key manager connected to a QKD device generating a link key by quantum key distribution (QKD); and
a processing unit (83) configured to encrypt communication with the destination application by causing a source application to operate,
wherein the application key

is encrypted by the link key and transmitted to the second key manager by using route information determined on the basis of a first reference value used for determining a key sharing network, through which the application key is transmitted from the first key manager belonging to a first key sharing network to a second key manager belonging to a second key sharing network, and
is transmitted from the second key manager to the destination application.

14. A key management method implemented by a computer as a key manager (10), the key manager being connected to a quantum key distribution (QKD) device (2) generating a link key by QKD, an application (5) of a user network, and a quantum key distribution network (QKDN) control device (6), the key management method comprising:

receiving route information from the QKDN control device, the route information representing a route for transmitting, to a destination key manager, an application key used for encrypting or decrypting communication in the user network; and
identifying a key manager from the route information, the key manager to be identified being located in a first key sharing network (102a) to which the key manager connected to the application belongs and being connected to a second key sharing network (102b);
determining a route in the first key sharing network from the key manager connected to the application to the key manager connected to the second key sharing network, the route being determined on the basis of resource information of the first key sharing network; and
causing a communication interface to transmit the application key encrypted with the link key by using the route.

15. A quantum key distribution network control (QKDN) method implemented by a computer as a QKDN control device (6), the QKDN control device being connected to a first key manager (10a) transmitting, to an application, an application key used for encrypting or decrypting communication between applications in a user network, the QKDN control method comprising:

calculating a first reference value used for determining a key sharing network through which the application key is transmitted from the first key manager (10a) belonging to a first key sharing network (102a) to a second key manager (10b) belonging to a second key sharing network (102b);
determining, on the basis of the first reference value, the key sharing network through which the application key is transmitted from the first key manager to the second key manager; and

transmitting, to the first key manager, route information representing the key sharing network to be passed through.

16. An information processing method implemented by a computer as an information processing device, the method comprising:

receiving an application key used for encrypting or decrypting communication with a destination application in a user network, the application key being received from a first key manager connected to a QKD device generating a link key by quantum key distribution (QKD); and
encrypting communication with the destination application by causing a source application to operate,
wherein the application key

is encrypted by the link key and transmitted to the second key manager by using route information determined on the basis of a first reference value used for determining a key sharing network, through which the application key is transmitted from the first key manager belonging to a first key sharing network to a second key manager belonging to a second key sharing network, and
is transmitted from the second key manager to the destination application.

17. A computer-readable recording medium on which programmed instructions are recorded, the programmed instructions being executed by a computer as a key manager (10), the key manager being connected to a quantum key distribution (QKD) device (2) generating a link key by QKD, an application (5) of a user network, and a quantum key distribution network (QKDN) control device (6), the computer program causing the computer to execute processing of

receiving route information from the QKDN control device, the route information representing a route for transmitting, to a destination key manager, an application key used for encrypting or decrypting communication in the user network; and
identifying a key manager from the route information, the key manager to be identified being located in a first key sharing network (102a) to which the key manager connected to the application belongs and being connected to a second key sharing network (102b);
determining a route in the first key sharing network from the key manager connected to the application to the key manager connected to the second key sharing network, the route being determined on the basis of resource information of the first key sharing network; and
causing a communication interface to transmit the application key encrypted with the link key by using the route.

18. A computer-readable recording medium on which programmed instructions are recorded, the programmed instructions being executed by a computer as a quantum key distribution network (QKDN) control device (6), the QKDN control device being connected to a first key manager (10a) transmitting, to an application, an application key used for encrypting or decrypting communication between applications in a user network, the computer program causing the computer to execute processing of

calculating a first reference value used for determining a key sharing network through which the application key is transmitted from the first key manager (10a) belonging to a first key sharing network (102a) to a second key manager (10b) belonging to a second key sharing network (102b);
determining, on the basis of the first reference value, the key sharing network through which the application key is transmitted from the first key manager to the second key manager; and
transmitting, to the first key manager, route information representing the key sharing network to be passed through.

# FIG.1

EP 4 436 099 A1

# FIG.2

APPLICATION A

APPLICATION D

DATA COMMUNICATION NETWORK 103

100

APPLICATION KEY

APPLICATION KEY

Key Sharing Network 102

KM 10a

KM 10b

KM 10c

KM 10d

KM

LINK KEY

KM

KM

KM

LINK KEY

QKD MODULE 2b

QKD MODULE 2c

QKD MODULE 2d

QKD MODULE 2a

QKD MODULE

QKD MODULE

QKD MODULE 101

QKD MODULE

QKD MODULE

QKD MODULE

3

QKD MODULE

3

QKD MODULE

3

QKD links

QKD MODULE

QKD MODULE

QKD MODULE

QKD MODULE

QKD MODULE

QKD MODULE

QKD MODULE

QKD MODULE

QKD MODULE

QKD MODULE

QKDN CONTROL DEVICE 6

EP 4 436 099 A1

# FIG.3A

BOTTLENECK

SMALLEST VALUE OF REMAINING
KEY AMOUNTS OF LINKS
INCLUDEDIN KEY RELAY ROUTE
min {6, 5, 3}=3

# FIG.3B

HOP COUNT

HOP COUNT INCLUDED
IN KEY RELAY ROUTE
NUMBER OF RELAYS (2)+1=3

# FIG.3C

○ : KM

NUMERICAL VALUE: REMAINING
                  KEY AMOUNT

----▶ KEY RELAY ROUTE A: BOTTLENECK (3), HOP COUNT (2)

——▶ KEY RELAY ROUTE B: BOTTLENECK (6), HOP COUNT (3)

······▶ KEY RELAY ROUTE C: BOTTLENECK (7), HOP COUNT (4)

FIG.4

EP 4 436 099 A1

# FIG.5

EP 4 436 099 A1

# FIG.6

~8

INFORMATION
PROCESSING DEVICE

~81

| COMMUNICATION UNIT |

~82

| STORAGE UNIT |

~83

| PROCESSING UNIT |

# FIG.7

EP 4 436 099 A1

# FIG.8A

EP 4 436 099 A1

# FIG.8B

KEY
MANAGEMENT
LAYER

QKD
NETWORK
MANAGEMENT
LAYER

EP 4 436 099 A1

# FIG.9

EP 4 436 099 A1

# FIG.10

EP 4 436 099 A1

# FIG.11

EP 4 436 099 A1

# FIG.12

```
                    ┌─────────────┐
                    │    START    │
                    └──────┬──────┘
                           │                                    ⌒S1
          ┌──────▶┌────────▼──────────────────────────────┐
          │       │ CONFIRM KSN INFORMATION OF DESTINATION │
          │       └────────┬──────────────────────────────┘
          │                │                                 ⌒S2
          │       ┌────────▼──────────────────────────────┐
          │       │    CONFIRM STOPOVER BKM AND KSN        │
          │       └────────┬──────────────────────────────┘
  PERIODICALLY             │                                 ⌒S3
    UPDATE        ┌────────▼──────────────────────────────┐
  INFORMATION     │  CALCULATE SECOND REFERENCE VALUE OF   │
          │       │       EACH KEY RELAY ROUTE            │
          │       └────────┬──────────────────────────────┘
          │                │                                 ⌒S4
          │       ┌────────▼──────────────────────────────┐
          │       │  DETERMINE OPTIMUM ROUTE BY ROUTE     │
          └───────│       SELECTION ALGORITHM             │
                  └────────┬──────────────────────────────┘
                           │                                 ⌒S5
                  ┌────────▼──────────────────────────────┐
                  │  NOTIFY RELATED KM OF SELECTED ROUTE   │
                  └────────┬──────────────────────────────┘
                           │
                    ┌──────▼──────┐
                    │     END     │
                    └─────────────┘
```

# FIG.13

| TYPE | KM ID | KSN ID |
|------|-------|--------|
| i | 16.10.1.1 (KM a011) | #a |
| i | 16.10.3.32 (KM a057) | #a |
| o | xxxxxd616 (KM d616) | #d |
| o | xxxxxd633 (KM d633) | #d |
| ... | ... | ... |

# FIG.14

| TYPE | KSN ID | KSN ID | BKM ID | BKM ID |
|------|--------|--------|--------|--------|
| i | #a | #b | 16.10.15.112 (BKM a062) | 48.110.3.23 (BKM b053) |
| i | #a | #c | 16.10.133.129 (BKM a017) | xxxxxc033 (BKM c033) |
| o | #c | #e | xxxxxc987 (BKM c987) | 35.16.223.179 (BKM e205) |
| … | … | … | … | … |

# FIG.15

| TYPE | KSN ID | KSN ID | KSN ID | FIRST REFERENCE VALUE |
|------|--------|--------|--------|----------------------|
| o | #a | #d | #b | $O^b_{a,d}$ |
| o | #c | #d | #b | $O^b_{c,d}$ |
| o | #c | #d | #e | $O^e_{c,d}$ |
| … | … | … | … | … |

# FIG.16

| 0 | 8 | 16 | 24 | 32 |
|---|---|---|---|---|
| Version | | Type | | |
| Length | | Checksum | | |
| Numbers of KSNs | | Next BKM ID (Optional) | | |
| Source KM ID | | | | |
| Destination KM ID | | | | |
| Key information | | | | |
| e.g., Application Key ID | | | | |
| e.g., Application Key | | | | |
| ... | | | | |

variable

# FIG.17

| 0 | 8 | 16 | 24 | 32 |
|---|---|---|---|---|
| Version | | Type | | |
| Length | | Checksum | | |
| Numbers of KSNs | | | | |
| Current KSN ID | | | | |
| Source KSN ID #1 | | | | |
| Source KM ID #1 | | | | |
| To BKM/Destination KM ID #1 | | | | |
| Relay KSN ID #2 | | | | |
| From BKM ID #2 | | | | |
| To BKM ID #2 | | | | |
| ... | | | | |
| ... | | | | |
| ... | | | | |
| Destination KSN ID #q | | | | |
| From BKM ID #q | | | | |
| To Destination KM ID #q | | | | |
| Key information | | | | |
| e.g., Application Key ID | | | | |
| e.g., Application Key | | | | |
| ... | | | | |

variable

variable

EP 4 436 099 A1

# FIG.18

# FIG.19

Europäisches
Patentamt

European
Patent Office

Office européen
des brevets

# EUROPEAN SEARCH REPORT

Application Number

EP 23 21 5345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEHRDAD DIANATI ET AL: "Architecture and protocols of the future European quantum key distribution network", SECURITY AND COMMUNICATION NETWORKS, vol. 1, no. 1, 1 January 2008 (2008-01-01), pages 57-74, XP055539155, ISSN: 1939-0114, DOI: 10.1002/sec.13 * sections 1, 2.1, 2.4, 2.5; figure 18 * | 1-18 | INV. H04L9/08 H04L9/40 |
| X | US 2021/328784 A1 (DOI KAZUAKI [JP] ET AL) 21 October 2021 (2021-10-21) * paragraphs [0027], [0064] - [0080], [0103]; figures 2-5,8 * | 1-3,13, 14,16,17 | |
| X | US 2014/143443 A1 (TAKAHASHI RIRIKA [JP] ET AL) 22 May 2014 (2014-05-22) * paragraphs [0003] - [0005], [0038] - [0056]; figures 1,3 * | 1-3,13, 14,16,17 | |
| X | CN 112 332 984 A (INFORMATION & TELECOMMUNICATION BRANCH OF STATE GRID FUJIAN ELECTRIC P) 5 February 2021 (2021-02-05) * paragraphs [0052] - [0110]; figure 2 * | 4-13,15, 16,18 | TECHNICAL FIELDS SEARCHED (IPC) H04L |

The present search report has been drawn up for all claims

| Place of search | Date of completion of the search | Examiner |
|---|---|---|
| Munich | 10 May 2024 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 23 21 5345**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
1. claims: 1-18

    Key distribution in multiple domain KQD context

1.1. claims: 1-3, 14, 17

    key distribution by route computation

1.2. claims: 4-12, 15, 18

    determination of key sharing network

1.3. claims: 13, 16

    device receiving and using a key
            ---
```

```
Please note that all inventions mentioned under item 1, although not
necessarily linked by a common inventive concept, could be searched
without effort justifying an additional fee.
```

## ANNEX TO THE EUROPEAN SEARCH REPORT
## ON EUROPEAN PATENT APPLICATION NO.

EP 23 21 5345

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | | Publication date | Patent family member(s) | | Publication date |
|---|---|---|---|---|---|
| US 2021328784 | A1 | 21-10-2021 | EP | 3896897 A1 | 20-10-2021 |
| | | | JP | 7282713 B2 | 29-05-2023 |
| | | | JP | 2021170742 A | 28-10-2021 |
| | | | US | 2021328784 A1 | 21-10-2021 |
| US 2014143443 | A1 | 22-05-2014 | JP | 2014103514 A | 05-06-2014 |
| | | | US | 2014143443 A1 | 22-05-2014 |
| CN 112332984 | A | 05-02-2021 | NONE | | |

EPO FORM P0459

For more details about this annex : see Official Journal of the European Patent Office, No. 12/82